# EUROPEAN PATENT SPECIFICATION

(11) **EP 0 733 827 B1**
(45) Date of publication and mention of the grant of the patent: **29.08.2001**
(21) Application number: 96103666.2
(22) Date of filing: 08.03.1996
(51) Int. Cl.: F16H 3/66, F16H 63/30

(54) **Automatic transmission for vehicles**
Automatisches Getriebe für Fahrzeuge
Transmission automatique pour véhicules

(30) Priority: 24.03.1995 JP 9014595; 25.09.1995 JP 26904095
(43) Date of publication of application: 25.09.1996
(73) Proprietor: AISIN AW CO., LTD., Anjo-shi Aichi-ken (JP)
(72) Inventor: Moroto, Shuzo, Nagoya-shi, Aichi-ken 458 (JP); Taniguchi, Takao, Okazaki-shi, Aichi-ken, 444-21 (JP); Miyagawa, Shoichi, Okazaki-shi, Aichi-ken, 444-31 (JP); Tsukamoto, Kazumasa, Toyota-shi, Aichi-ken, 471 (JP); Hayabuchi, Masahiro, Anjo-shi, Aichi-ken, 446 (JP); Nishida, Masaaki, Anjo-shi, Aichi-ken, 446 (JP); Kasuya, Satoru, Hekinan-shi, Aichi-ken, 447 (JP); Morimoto, Takashi, 1160 Bruxells (BE); Todo, Minoru, Anjo-City, Aichi 446 (JP)
(74) Representative: VOSSIUS & PARTNER

(56) References cited:
- EP-A- 0 733 834
- US-A- 3 251 247
- US-A- 5 334 177

## Description

The present invention relates to an automatic transmission for a vehicle and, more particularly, to a vehicular automatic transmission for switching power transmission passages by a clutch in which a hydraulic servo portion is made unrotatable by using a stationary type cylinder.

In the automatic transmission which is mounted on a vehicle to establish a plurality of forward gear stages, at least two clutches are required for connecting rotary members relating to the speed change, independent upon the construction of the gear train. In the prior art, this clutch of the automatic transmission is the wet type multiple disk clutch, in which both the clutch hub and the clutch drum supporting the friction plate portions belong to the rotary members, unlike a similar wet type multiple disk brake for fixing the reaction elements to the transmission case or the like. It is, therefore, customary that the hydraulic servo for bringing the friction plate portion into engagement is also integrated with the clutch drum. Specifically, this construction is made (as will be called the "clutch drum type") by forming the clutch drum into a cylinder and by inserting a piston slidably into the cylinder to define an oil chamber by the cylinder and the piston. The clutch of this construction is exemplified by the technique which is disclosed in JP-A-52249/1987, for example.

In the case of the clutch drum type construction, as described above, the size of the system is enlarged by the cylinder of the hydraulic servo. This and the requirement of at least two clutches for establishing a plurality of forward gear stages are causes for preventing the size reduction of the automatic transmission.

In the automatic transmission, on the other hand, the rotary members experience a rotational change at a shifting time so that an inertia force (or inertia torque) is established by the rotational change and the weight of the rotary members to influence the fluctuations of the output shaft torque thereby to cause shift shocks. If the aforementioned prior art is evaluated from this aspect, this technique is of the clutch drum type, in which the hydraulic servos are contained in the rotary members, so that the weight of the rotary members is increased by the hydraulic servos to augment the inertia torque thereby to enlarge the aforementioned shift shocks.

Moreover, when the hydraulic servo is of the clutch drum type as in the prior art, a centrifugal oil pressure is generated by the centrifugal force acting upon the oil in the cylinder the piston receives the oil pressure which is higher by the centrifugal oil pressure than the output oil pressure coming from a hydraulic control system, so that the oil pressure characteristics at the shifting time are deteriorated by the raised oil pressure. Specifically, the centrifugal oil pressure acts to accelerate the release of the clutches at the releasing time and to quicken the engaging timing earlier than intended at the applying time. For these reasons, an oil chamber for offsetting the centrifugal oil pressure is provided according to the aforementioned technique disclosed in JP-A-52249/1987. However, this provision of the centrifugal oil pressure offsetting chamber is not preferred for lightening the shift shocks because it invites an increase in the weight of the rotary members. The provision of the centrifugal oil pressure offsetting chamber raises another problem that the size of the system is enlarged.

It is, therefore, a first object of the present invention to provide a vehicular automatic transmission which is intended to make the system compact by mounting two clutch hydraulic servos necessary for establishing a plurality of forward gear stages in a transmission case and to eliminate the centrifugal oil pressure offsetting oil chamber increasing the weight and enlarging the size of the rotary members, by adopting the stationary cylinder type to make the hydraulic servo unrotatable, thereby to reduce the inertia torque and accordingly lighten the shift shocks and to further reduce the size of the system.

Next, the aforementioned clutch drum type of the prior art is advantageous in that no unbalance force is generated by the clutch application because there is formed a closed loop in which the thrust force of the piston and the resultant reaction offset each other in the clutch drum. However, this advantage cannot be achieved in the case of the stationary cylinder type in which the hydraulic servo is separated from the clutch. For this reason, the thrust force of the hydraulic servo of one clutch may influence the other clutch when the hydraulic servos of the two clutches are made of the stationary type cylinders. In this case, the control becomes seriously complicated at a shifting time when one and other clutches grip each other.

Therefore, a second object of the present invention is to prevent the complicated control, which might otherwise be caused by making the hydraulic servos of the two clutches of the stationary type cylinders, by making the reaction members for supporting the thrust forces, which the individual clutches receive from the hydraulic servos, independent of each other to prevent the thrust forces from interfering with each other.

Next, a third object of the present invention is to realize the aforementioned construction for avoiding the interference of the thrust forces, by a simple structure.

In the case of the clutch drum type cylinder of the prior art, moreover, the thrust forces of the hydraulic servos in the clutch drums are balanced by the reactions to apply only the balanced application forces to the clutches so that no thrust force coming from the outside is applied to the clutches. In the case of the so-called "stationary type cylinder", on the other hand, the unbalanced force, as accompanying the application of the clutches, is effective so that its reaction has to be supported by other members such as the transmission mechanism, the input shaft and so on. As a result, various forces such as the thrust force resulting from the helical gear construction act upon the clutches. With these forces being effective at the time of releasing the clutches, therefore, the clearances between the friction plate portions of the clutches will change with the existing situations. At the time of applying the clutches, the clutch application characteristics will always change with the change in the clearances thereby to invite the deterioration of the controllability of the oil pressure at the shifting time and the shift shocks.

Therefore, a fourth object of the present invention is to prevent the deterioration of the controllability of the oil pressure at the shifting time and the shift shocks, as described above, by causing the return springs accompanying the clutches to act to hold the clearances of the clutches constant against the thrust forces coming from the outside.

In the case of the stationary cylinder type in which the hydraulic servos are separated from the clutches, on the other hand, the thrust forces are established at the clutch application time by the thrust forces of the hydraulic servos, as described above. Depending upon this supporting manner, the thrust forces may affect the transmission mechanisms.

Therefore, a fifth object of the present invention is to prevent the thrust forces of the pistons from affecting the transmission mechanisms even if the hydraulic servos are of the stationary cylinder type.

In the general clutch, moreover, the reactions of the piston thrust forces are supported by interposing a plurality of separator plates alternately in the axial direction between a plurality of friction members having facings adhered to their two faces, by interposing pressure plates between the friction members, as located at the side to be thrust by the pistons, and the pistons, and by bringing the friction members, as located at the opposite end portions, into abutment against the backing plates. These backing plates are fixed by snap rings on the members (e.g., usually the clutch drums) at the side supporting the separator plates. In the case of this construction of the prior art, an excessive axial space is required for fixing the backing plates, and these backing plates are supported in a cantilever manner only at their radially outer side. Thus, in order that the backing plates may be prevented from being warped into a dish-spring shape by the thrust forces coming from the pistons thereby to make ununiform the frictional engagement between the friction members and the separator plates, the backing plates have to be made considerably thick to augment the axial space.

Therefore, a sixth object of the present invention is to make unnecessary the thick backing plates for preventing the aforementioned deteriorations of the friction characteristics, by utilizing the members themselves for connecting the transmission mechanisms and the clutches in a driving manner, as the backing plates to make unnecessary the fixation by the snap rings thereby to reduce the axial space therefor.

In order to control the automatic transmission, generally speaking, it is desired that the r.p.m. of the input shaft of the transmission can be detected. In this respect, in the case of the clutch drum type of the prior art, the input r.p.m. is easily detected by attaching the rotor to the outer circumference of the drum. In the case of arranging the hydraulic servos on the two side walls of the transmission case, on the other hand, what is connected to the input shaft is necessarily the hubs supporting the inner circumferences of the friction plate portions of the clutch. As a result, it is difficult to detect the rotations of the input shaft at the outer circumferential side of the clutch from the hubs which are located at the inner circumferential side of the clutch.

Therefore, a seventh object of the present invention is to realize a construction which can detect the r.p.m. of the input shaft from the hub side of the clutch and at the outer circumferential side of the clutch.

Next, the clutch is desired that the friction plate portions be steadily fed with the lubricating oil, so as to prevent the heat generation no matter whether it might be applied or released, and to achieve stable friction characteristics during the application and release. In the clutch drum type of the prior art, however, most of transmission elements of the transmission mechanism stand still at the stop of the vehicle or at the gear stage, in which the transmission elements take no participation, for the construction in which the rim side is connected to the input shaft whereas the hub side is connected to one of the transmission elements. In this state, the still hubs obstruct the feed of the lubricating oil from the radially inner side of the hubs to the friction plate portions, to cause disadvantages in the aforementioned prevention of the heat generation and in the maintenance of the stable friction characteristics. These problems are necessarily caused when the clutch drum is connected to the input shaft.

Therefore, an eighth object of the present invention is to enable the clutch having the stationary cylinder type hydraulic servo construction to feed the friction plate portions with the lubricating oil at all times by connecting the hubs to the input shaft.

Incidentally, when the hydraulic servos of the two clutches are mounted in the transmission case to make the stationary cylinder type for the input clutches, as described above, the input shaft, as connected to both the input clutches, extends to the two end portions of the transmission case, and the transmission mechanism is sandwiched between the input clutches, thus providing the construction which is difficult to extract the output.

Therefore, a ninth object of the present invention is to provide a rational extraction arrangement for the shift outputs in the aforementioned construction.

Moreover, the general transmission mechanism of the prior art is usually required to arrange three clutches so as to establish the four forward stages. The arrangement of so many clutches as to enlarge the size of the system is disadvantageous for making the transmission compact.

Therefore, a tenth object of the present invention is to make the system more compact by arranging only two clutches to fit the transmission mechanism, which is enabled to establish four forward and one reverse gear stages by applying and releasing the clutches and brakes selectively, to the construction which is made compact as the stationary cylinder type by arranging the hydraulic servos of the aforementioned two clutches at the two ends of the transmission case.

Moreover, eleventh to thirteenth objects of the present invention are to provide a variety of modified constructions of the transmission mechanism for establishing the four forward speeds by the aforementioned two clutches.

Finally, a fourteenth object of the present invention is to provide a transmission mechanism for establishing five forward speeds by the two clutches with a view to achieving the objects similar to the aforementioned ones.

Incidentally, in connection with the first and second objects of the present invention, there exists in the prior art the technique of making the hydraulic servo of the clutch itself irrotational, as disclosed in JP-A-290731/1990 and 285331/1992. The former is applied to the clutch for connecting the differential mechanism and the output shaft for the torque distribution between the front and rear wheels in the center differential unit, and the latter is applied to the clutch for connecting the output gear of the power extraction unit (or power takeoff unit) to the output shaft. If the clutch having the unrotatable hydraulic servo is accordingly arranged at the final output takeoff portion which has no drastic rotation change at the shifting time of the transmission mechanism of the automatic transmission, there cannot be achieved the important functions, as intended by the present invention, to lighten the shift shock by reducing the inertia torque and to prevent the deteriorations of the oil pressure control characteristics due to the absence of the centrifugal oil pressure.

The above objects are achieved with the features of the claims.

According to a first embodiment of the present invention for achieving the aforementioned first object, there is provided a vehicular automatic transmission for establishing a plurality of forward gear stages, comprising: a transmission case; an input shaft; a transmission mechanism connected to the input shaft and including a plurality of transmission elements; an output shaft connected to the transmission mechanism; first and second clutches connecting any two of the input shaft and the transmission elements individually in a driving manner; and first and second hydraulic servos for applying the first and second clutches when fed with an oil pressure, wherein the transmission case encloses the transmission mechanism, the first and second clutches and the first and second hydraulic servos and includes side walls individually at both its axial end portions, wherein the first and second clutches are arranged across the transmission mechanism at both the axial ends of the transmission mechanism, and wherein the first and second hydraulic servos individually include: first and second stationary type cylinders so formed on the individual side walls of the transmission case as to confront each other; first and second pistons arranged slidably in the first and second cylinders, respectively, and individually defining, together with the first and second cylinders, oil chambers to be fed with the oil pressure; and first and second bearings arranged between the first and second pistons and the first and second clutches, respectively, for allowing the relative rotations between the first and second pistons and the first and second clutches, respectively, and for transmitting the thrust forces, as coming from the first and second pistons as the oil pressure is fed, to the first and second clutches, respectively.

According to a second embodiment of the present invention for achieving the aforementioned second object, there is provided the vehicular automatic transmission further comprising first and second reaction members for transmitting the respective thrust forces from the first and second hydraulic servos, respectively, to the transmission case, wherein the first and second reaction members transmit the thrust forces via passages independent of each other.

According to a third embodiment of the present invention for achieving the aforementioned third object, there is provided the vehicular automatic transmission, wherein one of the first and second reaction members includes the transmission mechanism whereas the other includes the input shaft.

According to a fourth embodiment of the present invention for achieving the aforementioned fourth object, there is provided the vehicular automatic transmission, wherein the first and second hydraulic servos include: first and second return springs for applying the thrust forces against the movements of the first and second pistons, as accompanying the feed of the oil pressure to the oil chambers, to the first and second pistons; and first and second thrust members between the first and second bearings and the first and second clutches, respectively, and wherein the first and second return springs abut against the first and second thrust members and the first and second reaction members, respectively.

According to a fifth embodiment of the present invention for achieving the aforementioned fifth object, there is provided the vehicular automatic transmission, wherein the input shaft extends between both the side walls through the transmission mechanism, wherein the transmission mechanism includes first and second flange portions arranged adjacent to the first and second clutches, respectively, so that the thrust forces from the first and second pistons are transmitted thereto through the first and second clutches, respectively, wherein the first and second flange portions transmit the thrust forces from the first and second pistons, respectively, to the input shaft, and wherein third and fourth bearings for regulating the axial movements of the input shaft, as accompanying the thrust forces from the first and second pistons, are interposed between the input shaft and the individual ones of the side walls.

According to a sixth embodiment of the present invention for achieving the aforementioned sixth object, there is provided the vehicular automatic transmission, wherein the input shaft extends between both the side walls through the transmission mechanism, wherein the transmission mechanism includes first and second flange portions arranged adjacent to the first and second clutches, respectively, so that the thrust forces from the first and second pistons are transmitted thereto through the first and second clutches, respectively, wherein the first and second clutches are actuated by the first and second hydraulic servos, respectively, to drive the input shaft and any of the transmission elements in a driving manner, and include: hubs connected to the input shaft through the first and second flange portions, respectively; and rims each connected to one of the transmission elements in a driven manner and arranged around the outer circumferences of the hubs across friction plate portions, wherein the friction plate portion of at least one of the first and second clutches includes: a plurality of friction members having two faces, to which facings are adhered; and a plurality of separator plates arranged axially alternately of the friction members, wherein the friction members are splined at their outer circumferences to the inner circumferences of the rims, wherein the separator plates are splined at their inner circumferences to the outer circumferences of the hubs, wherein at least one of the first and second hydraulic servos includes a thrust member splined on the outer circumference of the hub between the first or second bearing of the hydraulic servo and the clutch corresponding to the hydraulic servo, and wherein the thrust member and the flange portions are confronted by friction members which are individually positioned at the two outer ends of the friction members.

According to a seventh embodiment of the present invention for achieving the aforementioned seventh object, there is provided the vehicular automatic transmission, wherein the input shaft extends between both the side walls through the transmission mechanism, wherein the first and second clutches are actuated by the first and second hydraulic servos to drive the input shaft and any of the transmission elements in a driving manner, and individually include: hubs connected to the input shaft; and rims connected to one of the transmission elements in a driven manner and arranged around the outer circumferences of the hubs across friction plate portions, wherein one of the first and second hydraulic servos includes a thrust member between the first or second bearing of the hydraulic servo and the clutch corresponding to the hydraulic servo, and wherein the thrust member is connected relatively unrotatably and axially slidably to the hub and includes a rotor portion having at its circumferential portion a plurality of notches extended to the radially outer side of the rim and confronting a rotation sensor.

According to an eighth embodiment of the present invention for achieving the aforementioned eighth object, there is provided the vehicular automatic transmission, wherein the first and second clutches are actuated by the first and second hydraulic servos to drive the-input shaft and any of the transmission elements in a driving manner, and individually include: hubs connected to the input shaft; and rims connected to one of the transmission elements in a driven manner and arranged around the outer circumferences of the hubs across friction plate portions, and wherein the hubs individually have through oil passages for providing communication between the inner and outer circumferences of the hubs to introduce the lubricating oil fed from their radially inner sides to the friction plate portions.

According to a ninth embodiment of the present invention for achieving the aforementioned ninth object, there is provided the vehicular automatic transmission comprising: a counter shaft arranged in parallel with the output shaft and connected to the wheels in a driving manner; a counter drive gear connected integrally to the output shaft; and a counter driven gear meshing with the counter drive gear and connected integrally to the counter shaft, wherein the first and second clutches are actuated by the first and second hydraulic servos to connect the input shaft and any of the friction elements, respectively, in a driving manner, and wherein the counter drive gear is interposed between the first and second clutches.

According to a tenth embodiment of the present invention for achieving the aforementioned tenth object, there is provided the vehicular automatic transmission, wherein the transmission mechanism comprises: a first planetary gear set including: a first ring gear; a first carrier rotatably bearing a first pinion gear meshing with the first ring gear; and a first sun gear meshing with the first pinion gear; and a second planetary gear set including: a second ring gear connected to the first carrier; a second carrier rotatably bearing a second pinion gear meshing with the second ring gear and connected to the first ring gear; and a second sun gear meshing with the second pinion gear, wherein the first ring gear and the second carrier are connected to the output shaft, wherein the first sun gear is connected to the input shaft by the first clutch and retained on the case by a first brake, wherein the second sun gear is retained on the case by a second brake, and wherein the first carrier and the second ring gear are retained on the case by a third brake and connected to the input shaft by the second clutch.

According to an eleventh embodiment of the present invention for achieving the aforementioned eleventh object, there is provided the vehicular automatic transmission, wherein the transmission mechanism comprises: a first planetary gear set including: a first ring gear; a first carrier rotatably bearing a first pinion gear meshing with the first ring gear; and a first sun gear meshing with the first pinion gear; and a second planetary gear set including: a second ring gear; a second carrier rotatably bearing a second pinion gear meshing with the second ring gear and connected to the first ring gear; and a second sun gear meshing with the second pinion gear and connected to the first sun gear, wherein the first ring gear and the second carrier are connected to the output shaft, wherein the first sun gear and the second sun gear are connected to the input shaft by the first clutch and retained on the case by a first brake, wherein the second ring gear is retained on the case by a second brake, and wherein the first carrier is retained on the case by a third brake and connected to the input shaft by the second clutch.

According to a twelfth embodiment the present invention for achieving the aforementioned twelfth object, there is provided the vehicular automatic transmission, wherein the transmission mechanism comprises a planetary gear set including: a ring gear; a carrier rotatably bearing a first pinion gear meshing with the ring gear and a second pinion gear meshing with the first pinion gear; a first sun gear meshing with the first pinion gear; and a second sun gear meshing with the second pinion gear, wherein the carrier is connected to the output shaft, wherein the second sun gear is connected to the input shaft by the first clutch and retained on the case by a first brake, wherein the first sun gear is retained on the case by a second brake, and wherein the ring gear is retained on the case by a third brake and connected to the input shaft by the second clutch.

According to a thirteenth embodiment of the present invention for achieving the aforementioned thirteenth object, there is provided the vehicular automatic transmission, wherein the transmission mechanism comprises a planetary gear set including: a ring gear; a carrier rotatably bearing a first pinion gear meshing with the ring gear and a second pinion gar meshing with the first pinion gear; a first sun gear meshing with the first pinion gear; and a second sun gear meshing with the second pinion gear, wherein the ring gear is connected to the output shaft, wherein the first sun gear is connected to the input shaft by the first clutch and retained on the case by a first brake, wherein the second sun gear is retained on the case by a second brake, and wherein the carrier is retained on the case by a third brake and connected to the input shaft by the second clutch.

According to a fourteenth embodiment of the present invention for achieving the aforementioned fourteenth object, moreover, there is provided the vehicular automatic transmission, wherein the transmission mechanism comprises: a planetary gear set including: a first ring gear; a first carrier rotatably bearing a first pinion gear meshing with the first ring gear; a first sun gear meshing with the first pinion gear; a second ring gear connected to the first carrier; a second carrier rotatably bearing a second pinion gear meshing with the second ring gear and connected to the first ring gear; a second sun gear meshing with the second pinion gear; and a third sun gear meshing with a third pinion gear borne by the first carrier and relatively unrotatably connected to the first pinion gear with a smaller diameter than that of the first pinion gear, wherein the first ring gear and the second carrier are connected to the output shaft, wherein the first sun gear is connected to the input shaft by the first clutch and retained on the case by a first brake, wherein the second sun gear is retained on the case by a second brake, wherein the first carrier and the second ring gear are retained on the case by a third brake and connected to the input shaft by the second clutch, and wherein the third sun gear is retained on the case by a fourth brake.

According to the first embodiment of the present invention having the above-specified constructions, the first and second clutches are individually arranged across the transmission mechanism between the two axial ends of the transmission, and the cylinders of the first and second hydraulic servos for applying those clutches are formed in the two side walls of the case so that the two side walls of the case can be effectively utilized as the cylinders of the first and second hydraulic servos to give a compact construction to the two hydraulic servos of the two clutches thereby to prevent the system from being large-sized. Thanks to the aforementioned construction of the hydraulic servos for applying the clutches, on the other hand, the centrifugal oil pressure offsetting oil chamber, which might otherwise invite the large size of the system, need not be provided unlike the prior art so that the weights of-the rotary members can be reduced to lighten the shift shocks coming from the inertia torque at the shifting time.

According to the second embodiment of the present invention, moreover, the thrust forces from the first and second hydraulic servos to the first and second clutches do not act upon the other second and first clutches so that the complicated controls of the two clutches can be avoided.

According to the third embodiment of the present invention, still moreover, the reactions by the thrust forces to the first and second clutches can be supported by the simple structure.

According to the fourth embodiment of the present invention, furthermore, the return springs, as arranged between the reaction members and the thrust members, act, at the clutch releasing time, to hold the clearances of the clutches constant against the thrust forces from the outside so that the deteriorations of the controllabilities of the clutches and the shift shocks can be suppressed to the minimum.

According to the fifth embodiment of the present invention, furthermore, the thrust force from the piston of the first hydraulic servo is transmitted through the first clutch to the first flange portion and further through the input shaft to the second hydraulic servo until it is transmitted to the case side wall at the opposite side, because the fourth bearing is arranged at the side of the second hydraulic servo between the input shaft and the case side wall. On the other hand, a reaction in the direction reverse to the thrust force of the piston acts upon the case side wall at the side of the first hydraulic servo. As a result, the thrust force of the piston and the reverse reaction are offset after they are transmitted to the two case side walls, i.e., the transmission case. These functions can also be achieved for the second hydraulic servo. Thus, the thrust forces from the pistons can be prevented from affecting the transmission mechanism.

According to the sixth embodiment of the present invention, furthermore, the friction members of the clutches are splined to the rims, and the separator plates are splined to the same hubs as the thrust members. At the same time, the thrust members and the flange portions are made to confront the friction members so that the axial size can be shortened by utilizing the flange portions as the backing plates requiring no special axial stop. Moreover, it is unnecessary to thick the backing plates for preventing the deteriorations of the friction characteristics.

According to the seventh embodiment of the present invention, furthermore, the two hydraulic servos are arranged at the two ends of the transmission case so that the rotations of the input shaft can be lead out of the hubs, as located at the inner circumferences of the hubs to be necessarily connected to the input shaft, to the outer circumferential sides of the clutches through the thrust members, thereby to detect the r.p.m. of the input shaft at all times.

According to the eighth embodiment of the present invention, furthermore, the hubs of the clutches rotate at all times together with the input shaft so that the oil to be fed from the radially inner side is stably fed by the centrifugal force via the through oil passages of the hubs to the friction plate portions in the direction to promote the lubrication thereby to improve the lubrication efficiency and the cooling effect.

According to the ninth embodiment of the present invention, furthermore, the shift output is extracted to the counter shaft which is arranged in parallel with the input shaft so that it can be taken out to the counter driven gear without any interference with the input shaft, in spite of the construction in which the input clutches are arranged at the two ends of the input shaft extending over the two end portions of the transmission.

According to the tenth and eleventh embodiments of the present invention, furthermore, the four forward and one reverse stages can be established by the transmission mechanism having only the two clutches so that the transmission mechanism can fit the compact hydraulic servo construction using the stationary cylinder type hydraulic servo in which the two clutches are arranged at the two ends of the transmission case.

Finally, according to the fourteenth embodiment of the present invention, the five forward and one reverse stages can be established by the transmission mechanism having only the two clutches, to provide an automatic transmission which can establish the five forward stages even if the entire construction of the aforementioned system is made further compact.

Other objects and novel features and advantages of the present invention will become apparent from the following description to be made with reference to the accompanying drawings, in which:
Fig. 1 is a skeleton diagram showing the entire construction of a vehicular automatic transmission according to a first mode of embodiment of the present invention;
Fig. 2 is an operation diagram of the aforementioned transmission;
Fig. 3 is a section showing a portion of one clutch and its hydraulic servo of the vehicular automatic transmission according to the first mode of embodiment;
Fig. 4 is a section showing a portion of the clutch and its hydraulic servo of the vehicular automatic transmission according to the first mode of embodiment;
Fig. 5 is a skeleton diagram showing the entire construction of a vehicular automatic transmission according to a second mode of embodiment of the present invention;
Fig. 6 is a skeleton diagram showing the entire construction of a vehicular automatic transmission according to a third mode of embodiment of the present invention;
Fig. 7 is a skeleton diagram showing the entire construction of a vehicular automatic transmission according to a fourth mode of embodiment of the present invention;
Fig. 8 is a skeleton diagram showing the entire construction of a vehicular automatic transmission according to a fifth mode of embodiment of the present invention;
Fig. 9 is a skeleton diagram showing the entire construction of a vehicular automatic transmission according to a sixth mode of embodiment of the present invention;
Fig. 10 is a skeleton diagram showing the entire construction of a vehicular automatic transmission according to a seventh mode of embodiment of the present invention;
Fig. 11 is a skeleton diagram showing the entire construction of a vehicular automatic transmission according to an eighth mode of embodiment of the present invention;
Fig. 12 is a skeleton diagram showing the entire construction of a vehicular automatic transmission according to a ninth mode of embodiment of the present invention;
Fig. 13 is a skeleton diagram showing the entire construction of a vehicular automatic transmission according to a tenth mode of embodiment of the present invention;
Fig. 14 is an operation diagram of the aforementioned transmission;
Fig. 15 is a section showing a portion of one clutch and its hydraulic servo of the vehicular automatic transmission according to the tenth mode of embodiment;

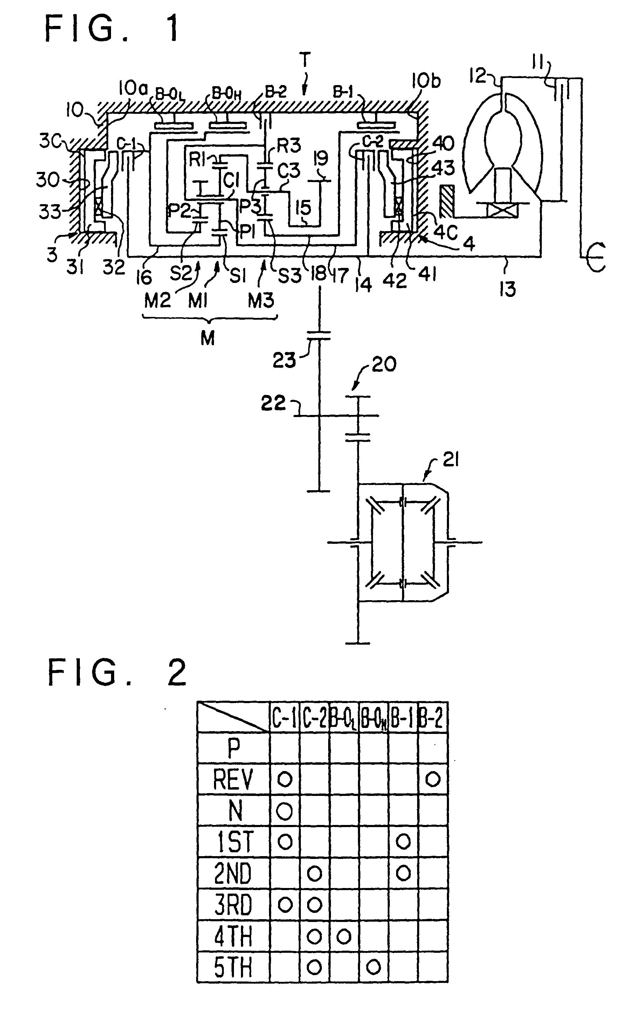

The modes of embodiment of the present invention will be described with reference to the accompanying drawings. First of all, Fig. 1 shows a first embodiment mode for controlling with two clutches the transmission mechanisms, in which the carriers and ring gears of planetary gears are directly connected to each other. The description will be started from that on the schematic construction. As shown in a skeleton, this automatic transmission T for a vehicle is constructed to include: a transmission case 10; an input shaft 14; a transmission mechanism M connected to the input shaft 14 and having a plurality of transmission elements (e.g., carriers or ring gears for bearing sun gears or pinion gears, as will be herein described); an output shaft 15 connected to the transmission mechanism M; first and second clutches (C-1 and C-2)for connecting the input shaft 14 and any two of a plurality of transmission elements such as a sun gear S1 and a carrier C1 in a driving manner; and first and second hydraulic servos 3 and 4 for bringing the first and second clutches, when supplied with the oil pressure, into respective engagements, thereby to establish a plurality of (e.g., five in the present embodiment) forward gear stages.

The transmission case 10 includes, at its axial two end portions, side walls 10a and 10b which envelope the transmission mechanism M, the first and second clutches (C-1 and C-2) and the first and second hydraulic servos 3 and 4. The first and second clutches (C-1 and C-2) are individually arranged at the axial two ends of the transmission mechanism M across the transmission mechanism M. The first and second hydraulic servos 3 and 4 respectively include: first and second cylinders 30 and 40 of stationary type, which are so formed on the respective side walls 10a and 10b of the transmission case 10 as to confront each other; first and second pistons 31 and 41 which are slidably arranged in those cylinders 30 and 40 and associated with the first and second cylinders 30 and 40, respectively, to define oil chambers 3C and 4C to be supplied with the oil pressure; and first and second bearings 32 and 42 which are arranged between the pistons 31 and 41 and the first and second clutches (C-1 and C-2), respectively, to allow relative rotations between the first and second pistons 31 and 41 and the first and second clutches (C-1 and C-1) and to transmit the thrusting forces, as the oil pressure is supplied, from the first and second pistons 31 and 41 to the first and second clutches (C-1 and C-1), respectively.

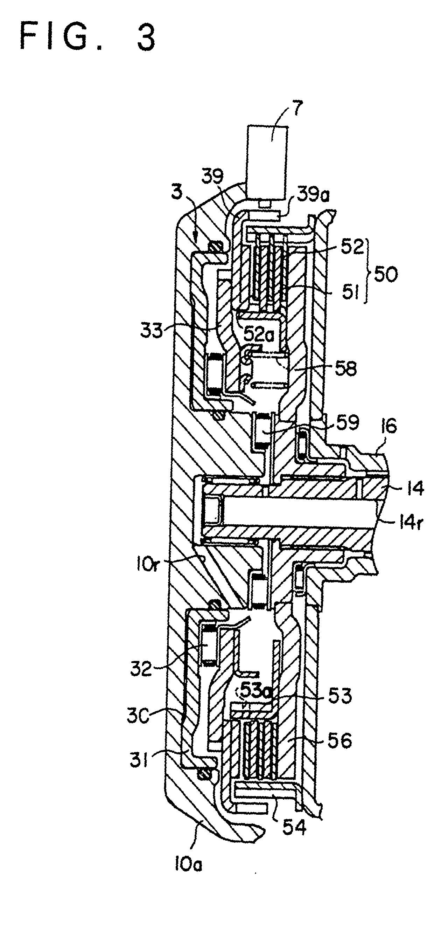

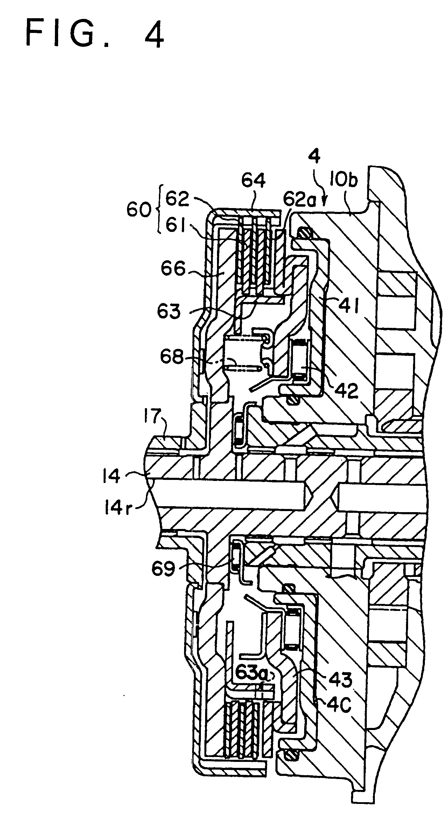

As shown in detailed sections in Figs. 3 and 4, the first and second hydraulic servos 3 and 4 are equipped, between the first and second bearings 32 and 42 and the first and second clutches (C-1 and C-2), with: thrust members 33 and 34 splined to the outer circumferences of hubs 53 and 63, respectively, unrotatably relative to each other but axially slidably; and first and second return springs 58 and 68 for applying me thrusts against the movements of the first and second pistons 31 and 41, as the oil pressure is fed to the oil chambers 3C and 4C, to the first and second pistons 31 and 41. The first and second return springs 58 and 68 abut against both the first and second thrust members 33 and 43 and first and second flange portions 56 and 66 acting as reaction members, respectively.

The thrust members 33 and 43 confront the bearings 32 and 42 at the inner circumferential side portion and the clutches (C-1 and C-2) at the outer circumferential side portion. In the present embodiment, more specifically, the thrust members 33 and 43 have abutment portions, as located at its one radially outer side, against friction members 52 and 62, and the inner circumferences of the abutment portions are so splined like separator plates 51 and 61 to the hubs 53 and 63 as not to rotate relative to each other but to slide in the axial directions. At the outer circumferential side of the abutment portion of one (as belonging to the hydraulic servo 3 in the present embodiment) of the thrust members 33, moreover, there is disposed a rotor portion 39 which is so axially extended as to cover the radially outer side of a rim 54 and which is formed with a plurality of notches 39a confronting a rotation sensor 7 mounted on the transmission case.

The input shaft 14 extends through the transmission mechanism M between both the side walls 10a and 10b. The transmission mechanism M includes the first and second flange portions 56 and 66 which are so arranged adjacent to the first and second clutches (C-1 and C-2), respectively, that the thrust forces from the first and second pistons 31 and 41 are transmitted thereto through the first and second clutches (C-1 and C-2), respectively. These flange portions 56 and 66 transmit the thrust forces of the first and second pistons 31 and 41, respectively, to the input shaft 14. Thus, the abutting portions of the thrust members 33 and 34 and the flange portions 56 and 66 are confronted by such ones of friction members 52 and 62, respectively, as are located at both the outer ends . Between the input shaft 14 and the respective side walls 10a and 10b, moreover, there are interposed third and fourth bearings 59 and 69 for regulating the axial movements of the input shaft 14, as are caused by the thrust forces of the first and second pistons 31 and 41.

The first and second clutches (C-1 and C-2) include: the hubs 53 and 63 which are connected to the input shaft 14 through the first and second flange portions 56 and 66; and the annular rim 54 and a drum-shaped rim 64, which are connected in a driving manner to the sun gear S1 and the carrier C1, respectively, through a sun gear shaft 16 and a carrier shaft 17, respectively, for the respective ones of the transmission elements, i.e., for the first clutch (C-1) and the second clutch (C-2) and which are arranged at the outer circumferential sides of the hubs 53 and 63 across friction plate portions 50 and 60.

The friction plate portions 50 and 60 of the first and second clutches (C-1 and C-2) include: the plurality of friction members 52 and 62 having facings 52a and 62a applied to both their faces; and the plurality of separator plates 51 and 61 arranged alternately of the friction members 52 and 62 in the axial direction. These friction members 52 and 62 are splined at their outer circumferential sides to the inner circumferential faces of the rims 54 and 64, and the separator plates 51 and 61 are splined at their inner circumferential sides to the outer circumferential faces of the hubs 53 and 63. Moreover, these individual hubs 53 and 63 have through oil passages 53a and 63a for providing communications between the inner and outer circumferential faces of the hubs 53 and 63 to introduce the lubricating oil, as fed from the radially inner sides of the hubs 53 and 63, to the friction plate portions 50 and 60.

Incidentally, reference characters 14r appearing in Figs. 3 and 4 designate an in-shaft oil passage for feeding the lubricating oil from the axial side to the individual portions, and characters 1Or designate in-housing oil passage, but the oil passage for feeding the working oil to the hydraulic servo 3 is not shown.

Reverting to Fig. 1, the automatic transmission T includes: a counter shaft 22 arranged in parallel with the output shaft 15 and finally connected in a driving manner to the not-shown wheels; a counter drive gear 19 integrally connected to the output shaft 15; and a counter driven gear 23 meshing with the counter drive gear 19 and integrally connected to the counter shaft 23. The counter drive gear 19 is located between the first and second clutches (C-1 and C-2).

Here will be described the overall construction of the gear train of the automatic transmission T. This automatic transmission T includes: a torque converter 12 having a lockup clutch 11; three stages of planetary gear sets M1, M2 and M3; brakes (B-0L, B-0H, B-1 and B-2); and the aforementioned clutches (C-1 and C-2). The planetary gear sets M1 and M3 are composed of sun gears S1 and S3, ring gears R1 and R3, and carriers C1 and C3 bearing pinion gears P1 and P3 meshing with them rotatably, and the planetary gear set M2 is composed of a sun gear S2, and a pinion gear P2 meshing with the former and having a smaller diameter than that of the aforementioned pinion gear P1. The pinion gear P2 is rotatably borne by the carrier C1 and is relatively unrotatably connected to the pinion gear P1. The respective ring gears R1 and R3 and carriers C3 and C1 of the two gear sets M1 and M3 are connected to each other, and the sun gear S1 and the carrier C1 of the gear set M1 are connected as input elements through the clutches (C-1 and C-2), respectively, to the input shaft 14 leading to the turbine shaft 13 of the torque converter 12. The ring gear R1 and the carrier C3, as connected to each other, are connected through the output shaft 15 to the counter drive gear 19 acting as an output element.

Moreover, the sun gear S1 of the gear set M1 can be fixed on the transmission case 10 by the brake (B-0L), and the sun gear S3 of the gear set M3 can also be fixed on the transmission case 10 by the brake (B-1). The ring gear R3, as connected to the carrier C1, can be fixed on the transmission case 10 by the brake (B-2), too. In the present embodiment, more specifically: the sun gear S1 is connected to the clutch (C-1) through the sun gear shaft 16 which is fitted around the input shaft 14; the carrier C1 is connected to the clutch (C-2) through the carrier shaft 17 which is fitted around the input shaft 14; and the sun gear S3 is connected to the brake (B-1) through a sun gear shaft 18 which is fitted around the carrier shaft 17. Moreover, the individual brakes are given band brake constructions but for the brake (B-2) which is given a wet type multiple disk construction, although not limited thereto. Incidentally, the counter drive gear 19 of this embodiment is connected through a counter gear 20 to a differential unit 21 to construct a transmission having a horizontal construction.

Under the control of the not-shown hydraulic control system, the transmission thus constructed feeds the oil pressure to the hydraulic servos corresponding to the individual clutches and brakes, to apply (as indicated by circle symbols) and release (as indicated by blanks) them thereby to establish the individual gear stages, as tabulated in Fig. 2. Specifically, the first speed (1ST) is established when the clutch (C-1) and the brake (B-1) are applied. At this stage, the rotation of the input shaft 14 is transmitted through the clutch (C-1) to the sun gear S1 and is outputted as the rotation of the carrier C3, which is most decelerated by the fixation of the sun gear S3 with the brake (B-1) being applied, to the counter drive gear 19. On the other hand, the second speed (2ND) is established when the clutch (C-2) and the brake (B-1) are applied. At this stage, the input, as transmitted through the clutch (C-2) to the carrier shaft 17, is introduced as it is through the carrier C1 into the ring gear R3, until it is outputted as the differential rotation of the carrier C3, which exemplifies a reaction element by the sun gear S3 fixed by the applied brake (B-1), to the counter drive gear 19. The third speed (3RD) is established by the direct connection of the first planetary gear set M1, as achieved by the applications of the two clutches (C-1 and C-2). At this stage, the rotation of the input shaft 14 is outputted, as it is, as the rotation of the carrier C3 to the counter drive gear 19.

The fourth speed (4TH) by the overdrive is established when the clutch (C-2) and the brake (B-0L) for fixing the sun gear S1 are applied. At this stage, the rotation of the input shaft 14 is transmitted as the rotation of the ring gear R1, which is speeded up by the revolution of the pinion gear P1 with respect to the rotation of the carrier C1, from the carrier C3 to the counter drive gear 19. On the other hand, the fifth speed is established when the clutch (C-2) and the brake (B-0H) are applied. At this stage, the rotation of the input shaft 14 is transmitted as the rotation of the ring gear R1, which is speeded up more by the revolution of the radially smaller pinion gear P2 exerting the reaction upon the radially larger sun gear S2 than at the time of establishing the fourth speed, from the carrier C3 to the counter drive gear 19.

Incidentally, the reverse (REV) is established when the clutch (C-1) and the brake (B-2) are applied. At this stage, the rotation of the ring gear R1, as decelerated and reversed from the input of the sun gear S1 by the fixation of the carrier C1, is outputted through the carrier C3 from the counter drive gear 19.

When the oil chambers 3C and 4C are fed with the oil pressure from the not-shown in-housing oil passage, the pistons 31 and 41 are actuated. Since the bearings 32 and 42 and the thrust members 33 and 43 are interposed between the pistons 31 and 41 and the clutches (C-1 and C-2) according to the present invention, these clutches (C-1 and C-2) can transmit the thrust forces from the pistons 31 and 41 to the friction plate portions 50 and 60 while allowing the relative rotations between themselves and the pistons 31 and 41, so that they can be applied.

In these operations, the thrust force, as coming from the piston 31 of the first hydraulic servo 3, is transmitted through the bearing 32, the thrust member 33 and the friction plate portion 50 of the first clutch (C-1) to the first flange portion 56, from which the thrust force is further transmitted through the input shaft 14 to the second hydraulic servo 4. This thrust force is finally transmitted to the case side wall 10b at the opposite side because the fourth bearing 69 is arranged at the second hydraulic servo 4 between the input shaft 14 and the case side wall 10b. On the other hand, the reaction, as reversed from the thrust force of the piston 31, acts upon the case side wall 10a, at which the first hydraulic servo 3 is disposed. As a result, the thrust force of the piston 31 and the reaction in the reverse direction are transmitted to both the case side walls 10a and 10b, i.e., to the transmission case 10 so that they offset each other. This function is likewise achieved in the second hydraulic servo 4. Thus, the thrust forces from the two pistons 31 and 41 can be restrained from influencing upon the transmission mechanisms . In addition, both the flange portions 56 and 66 themselves perform the function as the backing plates of the clutches of the prior art in respect of the support of the aforementioned thrust forces while functioning as the power transmission members for connecting the input shaft 14 to the hubs 53 and 63 in a driving manner.

Thus, according to the aforementioned mode of embodiment, the hydraulic servos 3 and 4 are given the aforementioned constructions, and the clutches (C-1 and C-2) of the automatic transmission T are applied by those hydraulic servos. As a result, the size of the system can be made small, and the weights of the sun gear shaft 16, the carrier shaft and their relatives can be reduced to lighten the shift shocks which are caused by the inertia torque at the shifting time.
Moreover, the feed of the oil pressure to the oil chambers 3C and 4C will not invite the deteriorations of the hydraulic control characteristics, as might otherwise be caused at the shifting time by the establishment of the centrifugal oil pressure, because the cylinders 31 and 41 are formed in the transmission case 10.

Thanks to the aforementioned simple reaction supporting structure, moreover, the thrust forces from the first and second hydraulic servos 3 and 4 to the first and second clutches (C-1 and C-2) are not applied to the other second and first clutches (C-2 and C-1) so that the controls of these two clutches can be restrained from getting complicated.

Still moreover, the return springs 58 and 68, as interposed between the flange portions 56 and 66 forming the reaction members and the thrust members 33 and 43, act to retain the constant clearance between the friction members 51 and 61 of the friction plate portions 50 and 60 of the clutches and the separator plates 52 and 62, against the thrust forces coming from the outside when the clutches are to be released, so that the deteriorations of the controllabilities of the clutches and the shift shocks can be suppressed to the minimum.

Furthermore, the friction members 51 and 61 of the clutches (C-1 and C-2) are splined to the rims 54 and 64, and the separator plates 52 and 62 are splined to the hubs 53 and 63 which are shared with the thrust members 33 and 43. At the same time, these thrust members 33 and 43 and the flange portions 56 and 66 are made to confront each other. As a result, the axial size can be shortened by utilizing the flange portions 56 and 66 as the backing plates which do not require any special axial stop. In addition, it is unnecessary to thicken the backing plates so as to prevent the deteriorations of the friction characteristics.

Furthermore, since both the hydraulic servos 3 and 4 are arranged at the two ends of the transmission case 10, the rotation of the input shaft 4 can be led to the outer circumferential side of the clutches through the thrust members 33 and 43 from the hubs 53 and 63 to be necessarily connected to the input shaft 14, as located at the inner circumferential side of the clutches. The displacement of the notches 39a of the rotor portion 39 is detected as pulses by the rotation sensor 7 so that the r.p.m. of the input shaft 14 can be detected at all times no matter whether the clutch (C-1) might be applied or released.

Furthermore, the hubs 53 and 63 of the clutches (C-1 and C-2) always rotate with the input shaft 14 so that the oil, as fed from the in-shaft oil passage 14r at the radially inner side, is stably fed by the centrifugal force to the friction plate portions 50 and 60 via the through oil passages 53a and 63a of the hubs 53 and 63 to act in the lubrication promoting direction thereby to improve the lubricating performance and the cooling effect.

Thanks to the construction in which the shift output is extracted to the counter shaft 22 arranged in parallel with the input shaft 14, furthermore, the shift output can be extracted to the counter driven gear 23 without any interference with the input shaft 14, in spite of the construction in which the input clutches (C-1 and C-2) are arranged at the two ends of the input shaft 14 extending over the two end portions of the transmission T.

Furthermore, since the transmission mechanism M can establish the five forward and one reverse stages with only two clutches, it is matched by the compact hydraulic servo construction having the hydraulic servos of the stationary cylinder type in which the two clutches are arranged at the two ends of the transmission case 10, so that the entire construction of the system can be made more compact.

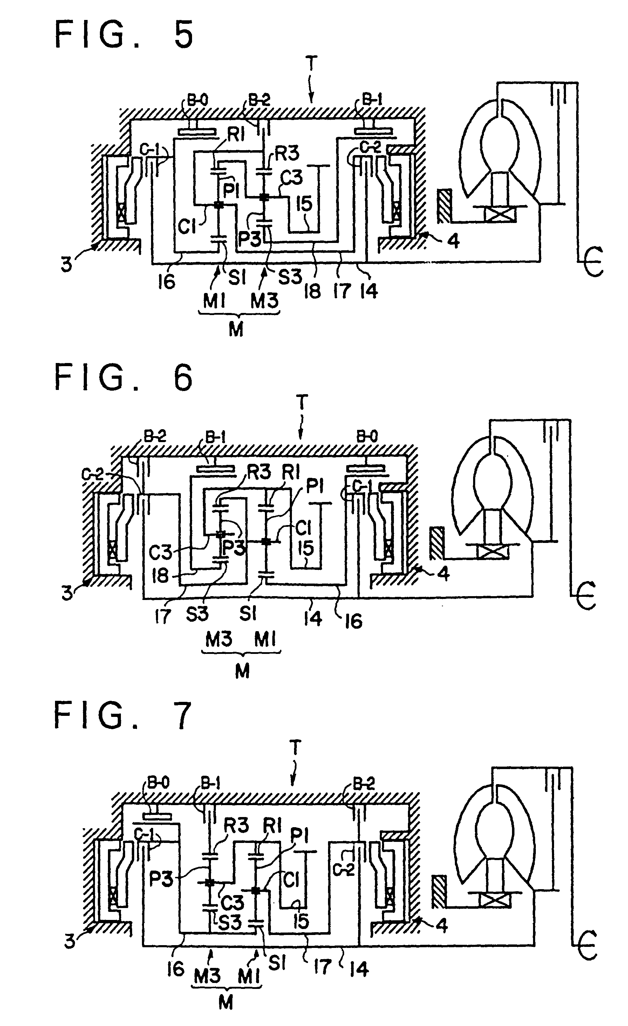

Next, Fig. 5 is a skeleton diagram showing a vehicular automatic transmission T according to a second mode of embodiment of the present invention. In this embodiment, the forward gear stages are set to four by eliminating the planetary gear set M2 of the first mode of embodiment. According to this change, the brake (B-0H) for braking that sun gear S2 of the gear set M2 is eliminated, and the brake corresponding to the aforementioned brake (B-0L) is exemplified by a brake, as indicated by (B-0). The remaining construction is similar to the aforementioned one of the first mode of embodiment so that the description of the construction of the individual portions is omitted by designating the corresponding members by similar reference numerals or letters.

With this construction, the forward gear stages are four, as described above, and the situations of the applying/releasing relations of the frictional engagement elements and the power transmissions at the individual gear stages including the reverse one are similar to the foregoing ones. Hence, the descriptions are replaced by the foregoing ones of the operations and the operation diagram of Fig. 2 such that the brake (B-0L) is changed to the brake (B-0). With this construction, too, the effects to be obtained are similar to those of the first mode of embodiment.

Next, Fig. 6 is a skeleton diagram showing a vehicular automatic transmission T according to a third mode of embodiment of the present invention. In this embodiment, the transmission mechanisms substantially similar to those of the second mode of embodiment are longitudinally reversed together with the two clutches (C-1 and C-2) with respect to the transmission case. The descriptions of the constructions of the individual portions will be omitted by designating the corresponding members at similar reference numerals and/or letters. Even with this construction, not only the relations of the operations and power transmissions of the individual frictional engagement elements but also the effects to be obtained are similar to those of the second mode of embodiment.

Next, Fig. 7 is a skeleton diagram showing a vehicular automatic transmission T according to a fourth mode of embodiment of the present invention. According to this embodiment, the connecting relations of the transmission elements of the two planetary gear sets M1 and M2 are modified from those of the foregoing individual modes of embodiment. In this embodiment, the sun gears S1 and S2 are directly connected to each other, and the carrier C3 of one planetary gear set and the ring gear R1 of the other are directly connected to each other. With this construction, too, the applying and releasing relations of the frictional engagement elements and the gear stages to be established are absolutely identical to those of the foregoing second and third modes of embodiment. In the case of this embodiment: the first speed is the output of the carrier C3 by the input of the sun gear S3 and the reaction of the ring gear R3; the second speed is the output of the carrier C3 by the input of the carrier C1 and the reaction of the ring gear R3; the third speed is the output of the ring gear R1 by the direct connection of the planetary gear set M1; and the fourth speed is the over-drive output of the ring gear R1 by the input of the carrier C1 and the reaction of the sun gear S1. Even this construction can achieve effects similar to those of the first mode of embodiment.

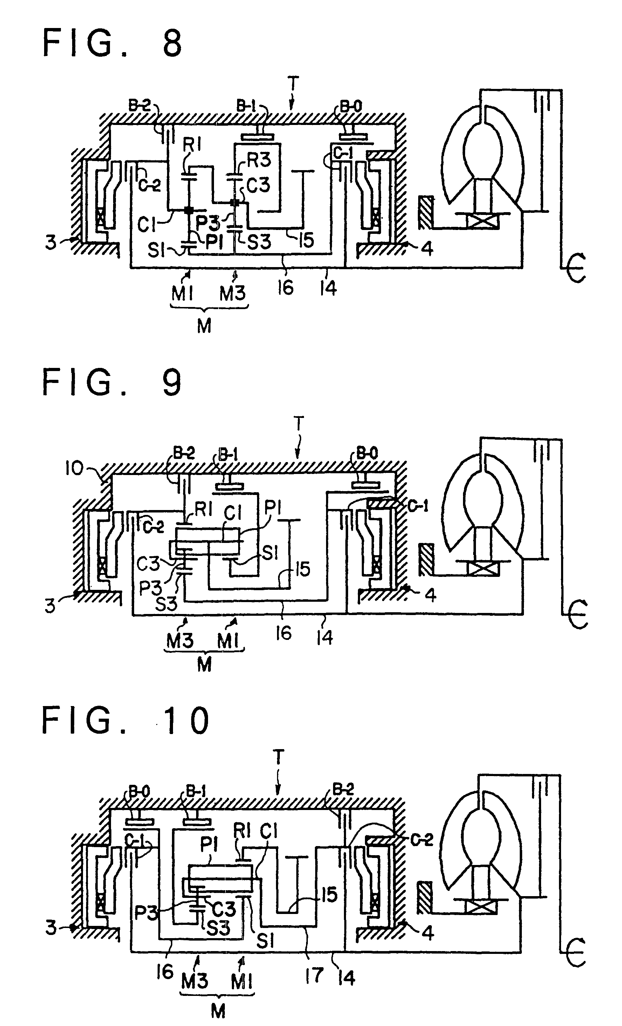

Next, Fig. 8 is a skeleton diagram showing a vehicular automatic transmission T according to a fifth mode of embodiment of the present invention. In this embodiment, the transmission mechanisms substantially similar to those of the fourth mode of embodiment are longitudinally reversed together with the two clutches with respect to the transmission case. Even with this construction, the situations of the applying and releasing relations and the power transmissions of the frictional engagement elements are absolutely identical to those of the aforementioned fourth mode of embodiment to provide the effects similar to those of the first mode of embodiment.

Next, Fig. 9 is a skeleton diagram showing a vehicular automatic transmission T according to a sixth mode of embodiment of the present invention. This embodiment employs the Ravignaux gear mechanism as the transmission mechanism M, which includes: the first planetary gear set: M1 composed of the sun gear S1, the ring gear R1 and the pinion gear P1 rotatably supported by the carrier C1 and meshing with them; and the second planetary gear set M3 composed of the sun gear S3, the ring gear R1 shared with the first planetary gear set M1, the pinion gear P1 shared with the first planetary gear set M1, and the pinion gear P3 meshing with the pinion gear P1 and the sun gear S3, such that the carrier C1 bearing the pinion gear P1 rotatably and the carrier C3 bearing the pinion gear P3 rotatably are connected to each other. Moreover: the sun gear S3 is connected in a driven manner to the input shaft 14 through the clutch (C-1) and can be fixed on the case 10 by the brake (B-0); the ring gear R1 is connected in a driven manner to the input shaft 14 through the clutch (C-2); and the carrier C1 is connected to the output shaft 15. Still moreover, the sun gear S2 can be fixed on the case 10 by the brake (B-1), and the ring gear R1 can be fixed on the case 10 by the brake (B-2). The remaining construction is similar to the aforementioned one of the first mode of embodiment so that the description of the construction of the individual portions is omitted by designating the corresponding members by similar reference numerals or letters.

The relations between the applications and releases of the individual clutches and brakes and the gear stages to be established when such construction is taken are absolutely identical to those of the second mode of embodiment and so on. Therefore, the following description will be limited to the power transmissions between the individual transmission elements. At the first speed time, the input of the sun gear S3 is transformed into the output of the carrier C1 by the rotations of the pinion gears P1 and P3 meshing with each other while using the sun gear S1 as the reaction element. At the second speed time, the input of the ring gear R1 is transformed into the output of the carrier C1 by the rotations of the pinion gears P1 and P3 meshing with each other while using the sun gear S1 as the reaction element. At the third speed time, the inputs of the sun gear S3 and the ring gear R1 are used, as they are, as the output of the carrier C1 by connecting the planetary gear set M3 directly. At the fourth speed time for the over-drive rotations, the sun gear S3 acts as the reaction element against the input of the ring gear R1 so that the rotations, as speeded up by the revolutions of the planetary gear P1, are outputted to the carrier C1. With this transmission mechanism and the arrangements of the individual clutches and brakes, too, it is possible to provide effects similar to the aforementioned ones of the first mode of embodiment.

Next, Fig. 10 is a skeleton diagram showing a vehicular automatic transmission T according to a seventh mode of embodiment of the present invention. In this embodiment, the input/output relations to a transmission mechanism substantially similar to that of the sixth mode of embodiment are reversed. With this construction: at the first speed time, the input of the sun gear S1 is transformed into the output of the ring gear R1 by the rotations of the planetary gears P1 and P3 which mesh with each other while using the sun gear S3 as the reaction element; at the second speed time, the input of the carrier C1 is transformed into the output of the ring gear R1 by the rotations of the planetary gears P1 and P3 which mesh with each other while using the sun gear S3 as the output element; and at the third speed time, the inputs of the sun gear S1 and the carrier C1 become, as they are, the output of the ring gear R1 while connecting the first planetary gear set M1 directly. At the fourth speed time for the over-drive rotations, the sun gear S1 acts as the reaction element against the input of the carrier C1 so that the rotations, as speeded up by the revolutions of the planetary gear P1, are outputted to the ring gear R1. With this construction, too, it is naturally possible to provide effects similar to those of the aforementioned sixth mode of embodiment.

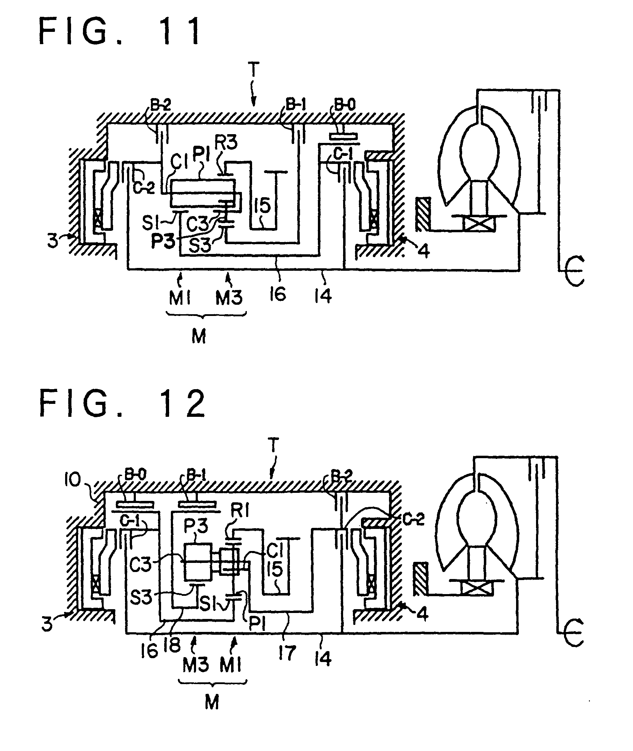

Next, Fig. 11 is a skeleton diagram showing a vehicular automatic transmission T according to an eighth mode of embodiment of the present invention. In this embodiment, the transmission mechanisms substantially similar to those of the seventh mode of embodiment are longitudinally reversed together with the two clutches with respect to the transmission case. With this construction, it is possible to provide effects and functions similar to those of the aforementioned seventh mode of embodiment.

Next, Fig. 11 is a skeleton diagram showing a vehicular automatic transmission T according to a ninth mode of embodiment of the present invention. This embodiment employs the Ravignaux gear mechanism different from that of the eighth mode of embodiment as the transmission mechanism M, which includes: the first planetary gear set M1 composed of the sun gear S1, the ring gear R1 and the pinion gear P1 rotatably supported by the carrier C1 and meshing with them; and the second planetary gear set M3 composed of the sun gear S3, the stepped planetary gear P3 meshing with the pinion gear P1 and the sun gear S3, and the carrier C3 connected to the carrier C1 bearing the pinion gear P1 rotatably, to bear the planetary gear P3 rotatably. Moreover: the sun gear S1 is connected in a driven manner to the input shaft 14 through the clutch (C-1) and can be fixed on the case 10 by the brake (B-0); the carrier C1 is connected in a driven manner to the input shaft 14 through the clutch (C-2); and the ring gear R1 is connected to the output shaft 15. Still moreover, the sun gear S3 can be fixed on the case 10 by the brake (B-1), and the carrier C1 can be fixed on the case 10 by the brake (B-2). The remaining construction is similar to the aforementioned one of the first mode of embodiment so that the description of the construction of the individual portions is omitted by designating the corresponding members by similar reference numerals or letters.

With this construction, too, the forward gear stages take the four speeds. The relations of this embodiment between the applications and releases of the individual clutches and brakes and the gear stages to be established are identical to those of the aforementioned second mode of embodiment and so on. In the case of this construction, at the first speed time, the input of the sun gear S1 is transformed into the output of the ring gear R1 by the rotations of the pinion gears P1 and P3 meshing with each other while using the sun gear S3 as the reaction element. At the second speed time, the input of the carrier C1 is transformed into the output of the ring gear R1 by the rotations of the pinion gears P1 and P3 meshing with each other while using the sun gear S3 as the reaction element. At the third speed time, the inputs of the sun gear S1 and the carrier C1 are used, as they are, as the output of the ring gear R1 by connecting the first planetary gear set M1 directly. At the fourth speed time for the over-drive rotations, the sun gear S1 acts as the reaction element against the input of the carrier C1 so that the rotations, as speeded up by the revolutions of the planetary gear P1, are outputted to the ring gear R1. With this construction being adopted, too, it is possible to provide effects similar to those of the first mode of embodiment.

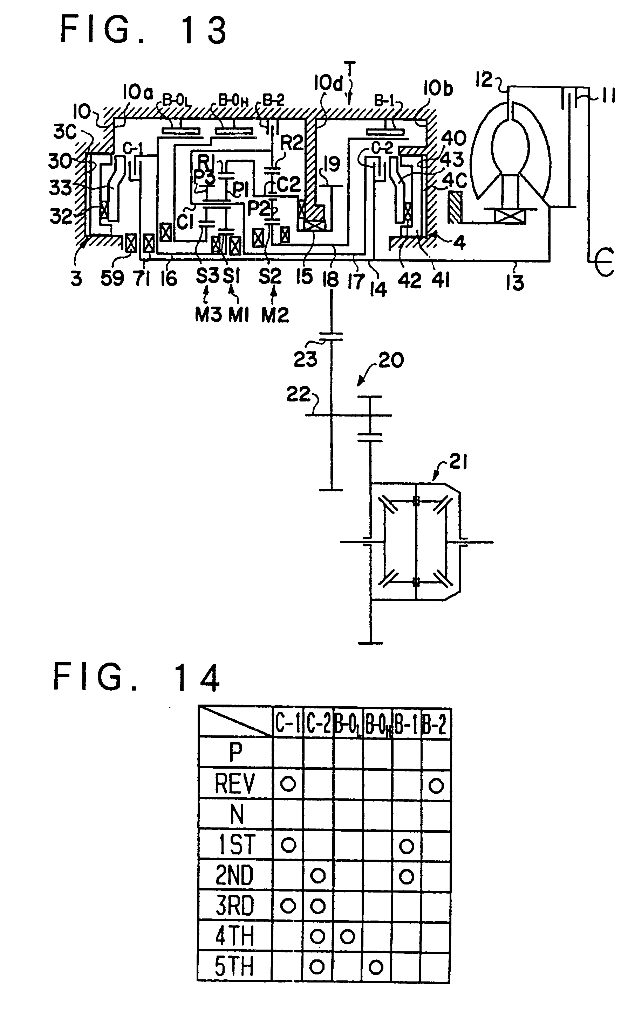

Finally, Fig. 13 is a skeleton diagram showing a vehicular automatic transmission T according to a tenth mode of embodiment of the present invention. This embodiment is given a gear train construction substantially similar to that of the foregoing first mode of embodiment but is different in the reaction receiving structure. In this embodiment, the thrust force to be applied to the clutch (C-1) is borne by a center support 10d which supports the output shaft 15 finally through a multiple stage thrust bearing interposed in the transmission mechanism M. The reason for adopting this reaction support construction will be described in comparison with the first mode of embodiment. When the thrust forces in the two directions, as applied to the individual clutches (C-1 and C-2) by the common input shaft 14 in the first mode of embodiment, are to be transmitted to the case side walls 10a and 10b, these clutches become difficult to control because the thrust forces exert influences upon the other clutches through the input shaft 14 at the so-called "clutch-to-clutch operation" time (which is effected in this embodiment from the first speed (1ST) to the second speed (2ND) or vice versa, as seen from Fig. 2) in which one clutch is applied while the other being released.

In the present tenth mode of embodiment, therefore, the thrust force to be applied to the clutch (C-2) is likewise borne by the side wall 10b of the transmission case from the input shaft 14 through the flange portion 56 and the bearing 59, and the thrust force to be applied to the clutch (C-1) is borne by the center support 10d which finally supports the output shaft 15, through the multiple-stage thrust bearing arranged, as generally indicated in Fig. 13.

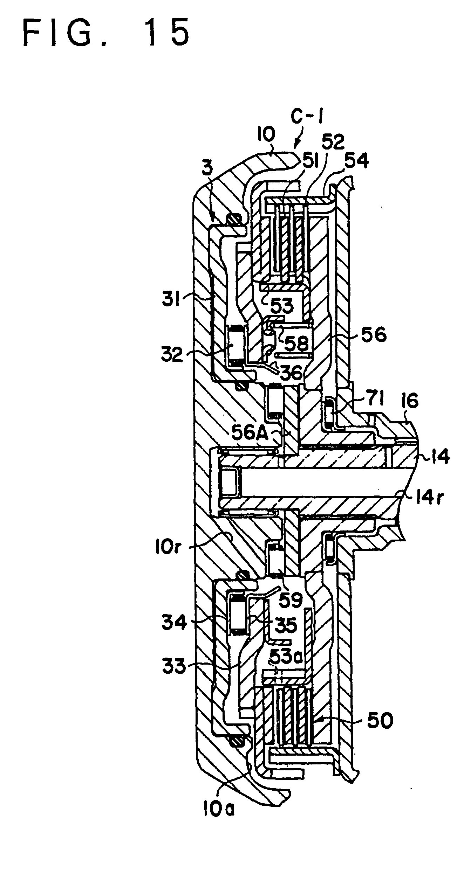

In the case of this mode of operation, the construction relating to the clutch (C-2) is essentially similar to those of the foregoing individual modes of embodiments, as shown in detail in Fig. 4. As shown in detail in Fig. 15, on the other hand, the construction, as adopted for the clutch (C-1), is slightly different due to the difference in the mode of supporting the reaction. Specifically, the flange portion 56 is so irrotationally splined to the input shaft 14 as to move in the axial directions. In place of this, there is fitted on the input shaft 14 a flange 56A which acts as a reaction member to abut against the step portion of the input shaft 14. This flange 56A transmits the thrust force from the clutch (C-2), as received by the input shaft 14, to the side wall 10a through the thrust bearing 59 which is interposed between the flange 56A and the side wall 10a of the case 10. On the other hand, the thrust force to be received by the clutch (C-1) is transmitted not to the aforementioned flange 56A but to the sun gear shaft 16 from the flange portion 56 through a thrust bearing 71 until it is finally received by the center support 10d through the individual thrust bearings which are arranged in the transmission mechanism M, as shown in Fig. 13. In this mode, therefore, the input shaft 14, together with the flange portion 66 of the transmission mechanism M and the flange 56A, acts as the reaction member against the clutch (C-2), and the transmission mechanism M, together with the flange portion 56, acts as the reaction member against the clutch (C-1). The remaining constructions are similar to those of the aforementioned first mode of embodiment, and the descriptions of the constructions of the individual portions will be omitted by designating the corresponding members by similar reference numerals or letters.

With this construction, the individual gear stages are similar to those of the aforementioned first mode of embodiment, as tabulated in the operation diagram of Fig. 14. At the aforementioned clutch-to-clutch operation time, moreover, no influence of the thrust force is exerted upon the other clutches through the input shaft 14. Thus, especially this mode of embodiment is advantageous in the feasible hydraulic controls of the clutches (C-1 and C-2). The remaining effects are similar to those of the first mode of embodiment.

In short, no matter what of the transmission mechanisms M of the foregoing modes of embodiment might be adopted, the hydraulic servos 3 and 4 of the two clutches (C-1 and C-2) are given the structure of the stationary cylinder type requiring no centrifugal oil pressure offset chamber. The two ends of the transmission mechanism M, i.e., the case side walls 10a and 10b are arranged as the cylinders so that the clutches can be constructed with a smaller space than that of the ordinary clutch drum type. Thus, it is possible to construct a compact and highly efficient automatic transmission. Incidentally, the construction having the hydraulic servos 3 and 4 at the case side walls 10a and 10b is also advantageous when band brakes are arranged around the outer circumferential portions of the planetary gears or clutches.

Although the present invention has been described in connection with the ten modes of embodiment in which the transmission mechanism is modified in the various manners and in which the reaction support construction is partially modified, it should not be limited to the transmission mechanisms, as exemplified in the foregoing modes of embodiment, but can be variously modified in its specific construction within the scope of the claim and widely applied to various transmission mechanisms. Moreover, although the foregoing individual embodiments of the present invention have exclusively exemplified the cases in which the input shaft and the transmission elements are mutually connected in the driving manner, the present invention can naturally be applied to the clutches for connecting the transmission elements of the transmission mechanism to each other in the driving manner.

## Claims

1. A vehicular automatic transmission for establishing a plurality of forward gear stages, comprising: a transmission case(10); an input shaft(14); a transmission mechanism(M) connected to said input shaft(14) and including a plurality of transmission elements; an output shaft(15) connected to said transmission mechanism(M); first and second clutches(C-1,C-2) connecting any two of said input shaft(14) and said transmission elements individually in a driving manner; and first and second hydraulic servos(3,4) for applying said first and second clutches(C-1,C-2) when fed with an oil pressure,
wherein said transmission case(10) encloses said transmission mechanism(M), said first and second clutches(C-1,C-2) and said first and second hydraulic servos(3,4) and includes side walls(10a,10b) individually at both its axial end portions,
wherein said first and second clutches(C-1,C-2) are arranged across said transmission mechanism(M) at both the axial ends of said transmission mechanism(M), and
wherein said first and second hydraulic servos(3,4) individually include:
first and second stationary type cylinders(30,40) so formed on the individual side walls(10a,10b) of said transmission case(10) as to confront each other;
first and second pistons(31,41) arranged slidably in said first and second cylinders(30,40), respectively, and individually defining, together with said first and second cylinders(30,40), oil chambers(3c,4c) to be fed with the oil pressure; and
first and second bearings(32,42) arranged between said first and second pistons(31,41) and said first and second clutches(C-1,C-2), respectively, for allowing relative rotations between said first and second pistons(31,41) and said first and second clutches(C-1,C-2), respectively, and for transmitting the thrust forces, as coming from said first and second pistons(31,41) as the oil pressure is fed, to said first and second clutches(C-1,C-2), respectively.

2. A vehicular automatic transmission according to claim 1, further comprising first and second reaction members for transmitting the respective thrust forces from said first and second hydraulic servos(3,4), respectively, to said transmission case(10),
wherein said first and second reaction members transmit said thrust forces to opposite walls of said transmission case(10) which oppose to said first and second hydraulic servos(3,4), respectively.

3. A vehicular automatic transmission according to claim 2,
wherein said transmission case(10) has a middle wall(center support 10d) between said side walls(10a,10b) for supporting the output shaft(15),
wherein said side wall(10b) associated with the second hydraulic servo(4) and said middle wall(center support 10d) oppose the first hydraulic servo(3) and said side wall(10a) associated with the first hydraulic servo(3) and said middle wall(center support 10d) oppose the second hydraulic servo(4).

4. A vehicular automatic transmission according to claim 2 or 3,
wherein said opposite walls are said side walls(10a,10b).

5. A vehicular automatic transmission according to any of claims 2 to 4,
wherein said first and second reaction members transmit said thrust forces via common passages.

6. A vehicular automatic transmission according to claim 5,
wherein said common passage is the input shaft(14).

7. A vehicular automatic transmission according to any of claims 1 to 6,
wherein said input shaft(14) extends between both said side walls(10c,10b) through said transmission mechanism(M),
wherein said transmission mechanism(M) includes first and second flange portions(56,66) arranged adjacent to said first and second clutches(C-1,C-2), respectively, so that the thrust forces from said first and second pistons(31,41) are transmitted thereto through said first and second clutches(C-1,C-2), respectively,
wherein said first and second flange portions(56,66) transmit the thrust forces from said first and second pistons(31,41), respectively, to said input shaft(14), and
wherein third and fourth bearings(59,69) for regulating the axial movements of said input shaft(14), as accompanying the thrust forces from said first and second pistons(31,41), are interposed between said input shaft(14) and the individual ones of said side walls(10a,10b).

8. A vehicular automatic transmission according to claim 2,
wherein said transmission case (10) has a middle wall (center support 10d) between said side walls (10a, 10b) for supporting the output shaft (15),
wherein the opposite wall which transmits the thrust force from the second hydraulic servo (4) is said side wall (10a) forming said first hydraulic servo (3), and
wherein the opposite wall which transmits the thrust force from the first hydraulic servo (3) is said middle wall(center support 10d).

9. A vehicular automatic transmission according to any of claims 2, 3 and 8,
wherein said first and second reaction members transmit said thrust forces via passages independent of each other.

10. A vehicular automatic transmission according to claim 9 or 10,
wherein one of said first and second reaction members includes said transmission mechanism(M) whereas the other includes said input shaft(14).

11. A vehicular automatic transmission according to claim 9,
wherein said first and second hydraulic servos(3,4) include: first and second return springs(58,68) for applying the thrust forces against the movements of said first and second pistons(31,41), as accompanying the feed of the oil pressure to said oil chambers(3c,4c), to said first and second pistons(31,41); and first and second thrust members(33,43) between said first and second bearings(32,42) and said first and second clutches(C-1,C-2), respectively, and
wherein said first and second return springs(58,68) abut against said first and second thrust members(33,43) and said first and second reaction members, respectively.

12. A vehicular automatic transmission according to any of claims 1 to 6, 8 and 9,
wherein said input shaft(14) extends between both said side walls(10a,10b) through said transmission mechanism(M),
wherein said transmission mechanism(M) includes first and second flange portions(56,66) arranged adjacent to said first and second clutches(C-1,C-2), respectively, so that the thrust forces from said first and second pistons(31,41) are transmitted thereto through said first and second clutches(C-1,C-2), respectively,
wherein said first and second clutches(C-1,C-2) are actuated by said first and second hydraulic servos(3,4), respectively, to drive said input shaft(14) and any of said transmission elements in a driving manner, and include: hubs(53,63) connected to said input shaft(14) through said first and second flange portions(56,66), respectively; and rims(54,64) each connected to one of said transmission elements in a driven manner and arranged around the outer circumferences of said hubs(53,63) across friction plate portions(50,60),
wherein the friction plate portion(50,60) of at least one of said first and second clutches(C-1,C-2) includes: a plurality of friction members(52,62) having two faces, to which facings are adhered; and a plurality of separator plates(51,61) arranged axially alternately of said friction members(52,62),
wherein said friction members(52,62) are splined at their outer circumferences to the inner circumferences of said rims(54,64),
wherein said separator plates(51,61) are splined at their inner circumferences to the outer circumferences of said hubs(53,63),
wherein at least one of said first and second hydraulic servos(3,4) includes a thrust member(33,43) splined on the outer circumference of said hub(53,63) between the first or second bearing(32,42) of said hydraulic servo and the clutch corresponding to said hydraulic servo, and
wherein said thrust member(33,43) and said flange portions(56,66) are confronted by friction members(52,62) which are individually positioned at the two outer ends of said friction members(52,62).

13. A vehicular automatic transmission according to any of claims 1 to 6, 8 and 9,
wherein said input shaft(14) extends between both said side walls(10a,10b) through said transmission mechanism(M),
wherein said first and second clutches(C-1,C-2) are actuated by said first and second hydraulic servos(3,4) to drive said input shaft(14) and any of said transmission elements in a driving manner, and individually include: hubs(53,63) connected to said input shaft(14); and rims(54,64) connected to one of said transmission elements in a driven manner and arranged around the outer circumferences of said hubs(53,63) across friction plate portions(50,60),
wherein one of said first and second hydraulic servos(3) includes a thrust member(33) between the first or second bearing(32) of said hydraulic servo(3) and the clutch(C-1) corresponding to said hydraulic servo(3), and
wherein said thrust member(33) is connected relatively unrotatably and axially slidably to said hub(53) and includes a rotor portion(39) having at its circumferential portion a plurality of notches(39a) extended to the radially outer side of said rim(54) and confronting a rotation sensor(7).

14. A vehicular automatic transmission according to any of claims 1 to 5, 8 and 9,
wherein said first and second clutches(C-1,C-2) are actuated by said first and second hydraulic servos(3,4) to drive said input shaft(14) and any of said transmission elements in a driving manner, and individually include: hubs(53,63) connected to said input shaft(14); and rims(54,64) connected to one of said transmission elements in a driven manner and arranged around the outer circumferences of said hubs across friction plate portions(50,60), and
wherein said hubs(53,63) individually have through oil passages(53a,63a) for providing communication between the inner and outer circumferences of said hubs(53,63) to introduce the lubricating oil fed from their radially inner sides to said friction plate portions(50,60).

15. A vehicular automatic transmission according to claim 1 or 2,
further comprising: a counter shaft(22) arranged in parallel with said output shaft(15) and connected to the wheels in a driving manner; a counter drive gear(19) connected integrally to said output shaft(15); and a counter driven gear(23) meshing with said counter drive gear(19) and connected integrally to said counter shaft(22),
wherein said first and second clutches(C-1,C-2) are actuated by said first and second hydraulic servos(3,4) to connect said input shaft(14) and any of said friction elements, respectively, in a driving manner, and
wherein said counter drive gear(19) is interposed between said first and second clutches(C-1,C-2).

16. A vehicular automatic transmission according to any of claims 1 to 15,
wherein said transmission mechanism(M) comprises:
a first planetary gear set(M1) including: a first ring gear(R1); a first carrier(C1) rotatably bearing a first pinion gear(P1) meshing with said first ring gear(R1); and a first sun gear(S1) meshing with said first pinion gear(P1); and
a second planetary gear set(M2) including: a second ring gear(R3) connected to said first carrier(C1); a second carrier(C3) rotatably bearing a second pinion gear(P3) meshing with said second ring gear(R3) and connected to said first ring gear(R1): and a second sun gear(S3) meshing with said second pinion gear(P3),
wherein said first ring gear(R1) and said second carrier(C3) are connected to said output shaft(15),
wherein said first sun gear(S1) is connected to said input shaft(14) by said first clutch(C-1) and retained on said case(10) by a first brake(B-0),
wherein said second sun gear(S3) is retained on said case(10) by a second brake(B-1), and
wherein said first carrier(C1) and said second ring gear(R3) are retained on said case(10) by a third brake(B-2) and connected to said input shaft(14) by said second clutch(C-2).

17. A vehicular automatic transmission according to any of claims 1 to 15,
wherein said transmission mechanism(M) comprises:
a first planetary gear set(M1) including: a first ring gear(R1); a first carrier(C1) rotatably bearing a first pinion gear(P1) meshing with said first ring gear(R1); and a first sun gear(S1) meshing with said first pinion gear(P1); and
a second planetary gear set(M3) including: a second ring gear(R3); a second carrier(C3) rotatably bearing a second pinion gear(P3) meshing with said second ring gear(R3) and connected to said first ring gear(R1); and a second sun gear(S3) meshing with said second pinion gear(P3) and connected to said first sun gear(S1),
wherein said first ring gear(R1) and said second carrier(C3) are connected to said output shaft(15),
wherein said first sun gear(S1) and said second sun gear(S3) are connected to said input shaft(14) by said first clutch(C-1) and retained on said case(10) by a first brake(B-0),
wherein said second ring gear(R3) is retained on said case(10) by a second brake(B-1), and
wherein said first carrier(C1) is retained on said case(10) by a third brake(B-2) and connected to said input shaft(14) by said second clutch(C-2).

18. A vehicular automatic transmission according to any of claims 1 to 15,
wherein said transmission mechanism(M) comprises a planetary gear set including: a ring gear(R1); a carrier(C1) rotatably bearing a first pinion gear(P1) meshing with said ring gear(R1) and a second pinion gear(P3) meshing with said first pinion gear(P1); a first sun gear(S1) meshing with said first pinion gear(P1); and a second sun gear(S3) meshing with said second pinion gear(P3),
wherein said carrier(C1) is connected to said output shaft(15),
wherein said second sun gear(S3) is connected to said input shaft(14) by said first clutch(C-1) and retained on said case(10) by a first brake(B-0),
wherein said first sun gear(S1) is retained on said case(10) by a second brake(B-1), and
wherein said ring gear(R1) is retained on said case(10) by a third brake(B-2) and connected to said input shaft(14) by said second clutch(C-2).

19. A vehicular automatic transmission according to any of claims 1 to 15,
wherein said transmission mechanism(M) comprises a planetary gear set including: a ring gear(R1); a carrier(C1) rotatably bearing a first pinion gear(P1) meshing with said ring gear(R1) and a second pinion gear(P3) meshing with said first pinion gear(P1); a first sun gear(S1) meshing with said first pinion gear(P1); and a second sun gear(S3) meshing with said second pinion gear(P3),
wherein said ring gear(R1) is connected to said output shaft(15),
wherein said first sun gear(S1) is connected to said input shaft(14) by said first clutch(C-1) and retained on said case(10) by a first brake(B-0),
wherein said second sun gear(S3) is retained on said case(10) by a second brake(B-1), and
wherein said carrier(C1) is retained on said case(10) by a third brake(B-2) and connected to said input shaft(14) by said second clutch(C-2).

20. A vehicular automatic transmission according to any of claims 1 to 15,
wherein said transmission mechanism(M) comprises:
a planetary gear set including: a first ring gear(R1); a first carrier(C1) rotatably bearing a first pinion gear(P1) meshing with said first ring gear(R1); a first sun gear(S1) meshing with said first pinion gear(P1); a second ring gear(R3) connected to said first carrier(C1); a second carrier(C3) rotatably bearing a second pinion gear(P3) meshing with said second ring gear(R3) and connected to said first ring gear(R1); a second sun gear(S3) meshing with said second pinion gear (P3); and a third sun gear(S2) meshing with a third pinion gear(P2) borne by said first carrier(C1) and relatively unrotatably connected to said first pinion gear(P1) with a smaller diameter than that of said first pinion gear(P1),
wherein said first ring gear(R1) and said second carrier(C3) are connected to said output shaft(15),
wherein said first sun gear(S1) is connected to said input shaft(14) by said first clutch(C-1) and retained on said case(10) by a first brake(B-0_{L}),
wherein said second sun gear(S3) is retained on said case(10) by a second brake(B-1),
wherein said first carrier(C1) and said second ring gear(R3) are retained on said case(10) by a third brake(B-2) and connected to said input shaft(14) by said second clutch(C-2), and
wherein said third sun gear(S2) is retained on said case(10) by a fourth brake(B-0_{H}).

## Patentansprüche

1. Automatisches Fahrzeuggetriebe zur Herstellung von mehreren Vorwärts-Übersetzungsstufen, mit einem Getriebegehäuse (10); einer Eingangswelle (14); einem Getriebemechanismus (M), der mit der Eingangswelle (14) verbunden ist und mehrere Getriebeelemente aufweist; einer Ausgangswelle (15) die mit dem Getriebemechanismus (M) verbunden ist; ersten und zweiten Kupplungen (C-1,C-2), die die Eingangswelle (14) und beliebige zwei der Getriebeelemente einzeln in einer antreibenden Weise verbinden; und ersten und zweiten Hydraulikservoelementen (3,4) zum Einrücken der ersten und
zweiten Kupplungen (C-1,C-2), wenn sie mit einem Öldruck versorgt werden,
wobei das Getriebegehäuse (10) den Getriebemechanismus (M), die ersten und zweiten Kupplungen (C-1,C-2) und die ersten und zweiten Hydraulikservoelemente (3,4) umfaßt und an seinen beiden axialen Endabschnitten einzelne Seitenwände (10a,10b) aufweist,
wobei die ersten und zweiten Kupplungen (C-1, C-2) in dem Getriebemechanismus (M) an beiden axialen Enden des Getriebemechanismus (M) angeordnet sind, und
wobei die ersten und zweiten Hydraulikservoelemente (3,4) jeweils aufweisen:
erste und zweite feststehende Zylinder (30,40), die so an den einzelnen Seitenwänden (10a,10b) des Getriebegehäuses (10) ausgebildet sind, daß sie einander gegenüberstehen;
erste und zweite Kolben (31,41) die jeweils verschiebbar in den ersten und zweiten Zylindern (30,40) angeordnet sind, und jeweils zusammen mit den ersten und zweiten Zylindern (30,40) mit Öldruck zu versorgende Ölkammern (3c,4c) bilden; und
erste und zweite Lager (32,42), die jeweils zwischen den ersten und zweiten Kolben (31,41) und den ersten und zweiten Kupplungen (C-1,C-2) angeordnet sind, um Relativdrehbewegungen zwischen dem ersten und dem zweiten Kolben (31,41) einerseits und der ersten bzw. der zweiten Kupplung (C-1,C-2) andererseits zuzulassen und um die Druckkräfte, die von dem ersten und dem zweiten Kolben (31,41) erzeugt werden, wenn der Öldruck zugeführt wird, auf die erste bzw. zweite Kupplung (C-1,C-2) zu übertragen.

2. Automatisches Fahrzeuggetriebe nach Anspruch 1, das ferner erste und zweite Reaktionsglieder aufweist zur Übertragung der jeweiligen Druckkräfte jeweils von den ersten und zweiten Hydraulikservoelementen (3,4) auf das Getriebegehäuse (10),
wobei die ersten und zweiten Reaktionsglieder die Druckkräfte auf gegenüberliegende Wände des Getriebegehäuses (10) übertragen, die jeweils den ersten und zweiten Hydraulikservoelementen (3,4) gegenüberliegen.

3. Automatisches Fahrzeuggetriebe nach Anspruch 2,
wobei das Getriebegehäuse (10) eine Mittelwand (Mittelstütze 10d) zwischen den Seitenwänden (10a,10b) aufweist, um die Ausgangswelle (15) zu stützen,
wobei die dem zweiten Hydraulikservoelement (4) zugeordnete Seitenwand (10b) und die Mittelwand (Mittelstütze 10d) dem ersten Hydraulikservoelement (3) gegenüberliegen und die dem ersten Hydraulikservoelement (3) zugeordnete Seitenwand (10a) und die Mittelwand (Mittelstütze 10d) dem zweiten Hydraulikservoelement (4) gegenüberliegen.

4. Automatisches Fahrzeuggetriebe nach Anspruch 2 oder 3, wobei die gegenüberliegenden Wände die Seitenwände (10a, 10b) sind.

5. Automatisches Fahrzeuggetriebe nach einem der Ansprüche 2 bis 4,
wobei die ersten und zweiten Reaktionsglieder die Druckkräfte über gemeinsame Verbindungsglieder übertragen.

6. Automatisches Fahrzeuggetriebe nach Anspruch 5,
wobei das gemeinsame Verbindungsglied die Eingangswelle (14) ist.

7. Automatisches Fahrzeuggetriebe nach einem der Ansprüche 1 bis 6,
wobei sich die Eingangswelle (14) zwischen beiden Seitenwänden (10c,10b) durch den Getriebemechanismus (M) erstreckt,
wobei der Getriebemechanismus (M) erste und zweite Flanschabschnitte (56,66) aufweist, die jeweils benachbart zu den ersten und zweiten Kupplungen (C-1,C-2) angeordnet sind, so daß die Druckkräfte von den ersten und zweiten Kolben (31,41) jeweils durch die ersten und zweiten Kupplungen (C-1,C-2) darauf übertragen werden,
wobei die ersten und zweiten Flanschabschnitte (56,66) die Druckkräfte jeweils von den ersten und zweiten Kolben (31,41) auf die Eingangswelle (14) übetragen, und
wobei dritte und vierte Lager (59,69) zum axialen Spielausgleich der Eingangswelle (14) dienen, welche die Druckkräfte von den ersten und zweiten Kolben (31,41) leiten, zwischen der Eingangswelle (14) und den einzelnen Seitenwänden (10a,10b) angeordnet sind.

8. Automatisches Fahrzeuggetriebe nach Anspruch 2,
wobei das Getriebegehäuse (10) eine Mittelwand (Mittelstütze 10d) zwischen den Seitenwänden (10a,10b) aufweist, um die Ausgangswelle (15) zu stützen,
wobei die gegenüberliegende Wand, welche die Druckkraft vom zweiten Hydraulikservoelement (4) überträgt, die Seitenwand (10a) ist, die das erste Hydraulikservoelement (3) bildet, und
wobei die gegenüberliegende Wand, welche die Druckkraft vom ersten Hydraulikservoelement (3) überträgt, die Mittelwand (Mittelstütze 10d) ist.

9. Automatisches Fahrzeuggetriebe nach einem der Ansprüche 2, 3 und 8,
wobei die ersten und zweiten Reaktionsglieder die Druckkräfte über voneinander unabhängige Verbindungsglieder übertragen.

10. Automatisches Fahrzeuggetriebe nach Anspruch 9 oder 10,
wobei eines der ersten und zweiten Reaktionsglieder den Getriebemechanismus (M) aufweist, wohingegen das andere die Eingangswelle (14) aufweist.

11. Automatisches Fahrzeuggetriebe nach Anspruch 9,
wobei die ersten und zweiten Hydraulikservoelemente (3,4) aufweisen: erste und zweite Rückstellfedern (58,68) zum Ausüben der Druckkräfte auf die ersten und zweiten Kolben (31,41) gegen die Bewegungen der ersten und zweiten Kolben (31,41), aufgrund der Zufuhr des Öldrucks zu den Ölkammern (3c,4c); und erste und zweite Druckglieder (33,43) zwischen jeweils den ersten und zweiten Lagern (32,42) und den ersten und zweiten Kupplungen (C-1,C-2), und
wobei die ersten und zweiten Rückstellfedern (58,68) jeweils an die ersten und zweiten Druckglieder (33,43) und die ersten und zweiten Reaktionsglieder anstoßen.

12. Automatisches Fahrzeuggetriebe nach einem der Ansprüche 1 bis 6, 8 und 9,
wobei sich die Eingangswelle (14) zwischen beiden Seitenwänden (10a,10b) durch den Getriebemechanismus (M) erstreckt,
wobei der Getriebemechanismus (M) erste und zweite Flanschabschnitte (56,66) aufweist, die jeweils benachbart zu den ersten und zweiten Kupplungen (C-1, C-2) angeordnet sind, so daß die Druckkräfte von den ersten und zweiten Kolben (31,41) jeweils durch die ersten und zweiten Kupplungen (C-1,C-2) darauf übertragen werden,
wobei die ersten und zweiten Kupplungen (C-1,C-2) jeweils durch die ersten und zweiten Hydraulikservoelemente (3,4) eingerückt werden, um die Eingangswelle (14) und eines der Getriebeelemente in einer antreibenden Weise anzutreiben, und aufweisen: Naben (53,63), die mit der Eingangswelle (14) jeweils durch die ersten und zweiten Flanschabschnitte (56,66) verbunden sind; und Kränze (54,64) die jeweils mit einem der Getriebeelemente in einer angetriebenen Weise verbunden sind und um die Außenumfänge der Naben (53,63) über Reibscheiben-Abschnitte (50,60) angeordnet sind,
wobei der Reibscheiben-Abschnitt (50,60) von mindestens einer der ersten und zweiten Kupplungen (C-1,C-2) aufweist: mehrere Reibungsglieder (52,62) mit zwei Flächen, auf die Beläge angebracht sind; und mehrere Trennscheiben (51,61) die axial abwechselnd mit den Reibungsgliedern (52,62) angeordnet sind,
wobei die Reibungsglieder (52,62) an ihren Außenumfängen mit den Innenumfängen der Kränze (54,64) keilverzahnt sind, wobei die Trennscheiben (51,61) an ihren Innenumfängen mit den Außenumfängen der Naben (53,63) keilverzahnt sind,
wobei mindestens eines der ersten und zweiten Hydraulikservoelemente (3,4) ein Druckglied (33,43) aufweist, das am Außenumfang der Nabe (53,63) zwischen dem ersten oder zweiten Lager (32,42) des Hydraulikservoelements und der dem Hydraulikservoelement zugeordneten Kupplung keilverzahnt ist, und
wobei das Druckglied (33,43) und die Flanschabschnitte (56,66) Reibungsgliedern (52,62) gegenüberliegen, die einzeln an den beiden Außenenden der Reibungsglieder (52,62) angeordnet sind.

13. Automatisches Fahrzeuggetriebe nach einem der Ansprüche 1 bis 6, 8 und 9,
wobei sich die Eingangswelle (14) zwischen beiden Seitenwänden (10a,10b) durch den Getriebemechanismus (M) erstreckt,
wobei die ersten und zweiten Kupplungen (C-1, C-2) durch die ersten und zweiten Hydraulikservoelemente (3,4) eingerückt werden, um die Eingangswelle (14) und eines der Getriebeelemente in einer antreibenden Weise anzutreiben, und einzeln aufweisen: Naben (53,63), die mit der Eingangswelle (14) verbunden sind; und Kränze (54,64) die mit einem der Getriebeelemente in einer angetriebenen Weise verbunden sind und um die Außenumfänge der Naben (53,63) über Reibscheiben-Abschnitte (50,60) angeordnet sind,
wobei eines der ersten und zweiten Hydraulikservoelemente (3) ein Druckglied (33) zwischen dem ersten oder zweiten Lager (32) des Hydraulikservoelements (3) und der Kupplung (C-1) aufweist, die dem Hydraulikservoelement (3) entspricht, und
wobei das Druckglied (33) relativ zu der Nabe (53) nicht-drehbar und axial verschiebbar vorgesehen ist und einen Rotorabschnitt (39) aufweist, der an seinem Umfangsabschnitt mehrere Kerben (39a) aufweist, die sich zur radialen Außenseite des Kranzes (54) erstrecken und einem Rotationssensor (7) gegenüberliegen.

14. Automatisches Fahrzeuggetriebe nach einem der Ansprüche 1 bis 5, 8 und 9,
wobei die ersten und zweiten Kupplungen (C-1, C-2) durch die ersten und zweiten Hydraulikservoelemente (3,4) eingerückt werden, um die Eingangswelle (14) und eines der Getriebeelemente in einer antreibenden Weise anzutreiben, und einzeln aufweisen:
Naben (53,63), die mit der Eingangswelle (14) verbunden sind; und Kränze (54, 64), die mit einem der Getriebeelemente in einer angetriebenen Weise verbunden sind und um die Außenumfänge der Naben über den Reibscheiben-Abschnitten (50,60) angeordnet sind, und
wobei die Naben (53,63) einzeln Öldurchgangskanäle (53a, 63a) aufweisen, um eine Verbindung zwischen den Innen- und
Außenumfängen der Naben (53,63) herzustellen, um das Schmieröl zuzuführen, das von ihren radialen Innenseiten den Reibscheiben-Abschnitten (50,60) zugeführt wird.

15. Automatisches Fahrzeuggetriebe nach Anspruch 1 oder 2,
das ferner aufweist: eine Vorgelegewelle (22), die parallel mit der Ausgangswelle (15) angeordnet und mit den Rädern in einer antreibenden Weise verbunden ist; ein Antriebsvorlegerad (19), das einstückig mit der Ausgangswelle (15) verbunden ist; und ein angetriebenes Vorlegerad (23), das mit dem Antriebsvorlegerad (19) ineinandergreift und einstückig mit der Vorgelegewelle (22) verbunden ist,
wobei die ersten und zweiten Kupplungen (C-1,C-2) durch die ersten und zweiten Hydraulikservoelemente (3,4) eingerückt werden, um jeweils die Eingangswelle (14) und eines der Reibelemente in einer antreibenden Weise zu verbinden, und wobei das Antriebsvorlegerad (19) zwischen den ersten und zweiten Kupplungen (C-1,C-2) angeordnet ist.

16. Automatisches Fahrzeuggetriebe nach einem der Ansprüche 1 bis 15,
wobei der Getriebemechanismus (M) aufweist:
einen ersten Planetenradsatz (M1) mit einem ersten Hohlrad (R1); einem ersten Träger (C1), der drehbar ein erstes Planetenrad (P1) trägt, das mit dem ersten Hohlrad (R1) ineinandergreift; und einem ersten Sonnenrad (S1), das mit dem ersten Planetenrad (P1) ineinandergreift; und
einen zweiten Planetenradsatz (M2) mit einem zweiten Hohlrad (R3), das mit dem ersten Träger (C1) verbunden ist; einem zweiten Träger (C3), der drehbar ein zweites Planetenrad (P3) trägt, das mit dem zweiten Hohlrad (R3) ineinandergreift und mit dem ersten Hohlrad (R1) verbunden ist; und einem zweiten Sonnenrad (S3), das mit dem zweiten Planetenrad (P3) ineinandergreift,
wobei das erste Hohlrad (R1) und der zweite Träger (C3) mit der Ausgangswelle (15) verbunden sind,
wobei das erste Sonnenrad (S1) mit der Eingangswelle (14) durch die erste Kupplung (C-1) verbunden ist und durch eine erste Bremse (B-0) am Gehäuse (10) gehalten wird,
wobei das zweite Sonnenrad (S3) durch eine zweite Bremse (B-1) am Gehäuse (10) gehalten wird, und
wobei der erste Träger (C1) und das zweite Hohlrad (R3) durch eine dritte Bremse (B-2) am Gehäuse (10) gehalten werden und mit der Eingangswelle (14) durch die zweite Kupplung (C-2) verbunden sind.

17. Automatisches Fahrzeuggetriebe nach einem der Ansprüche 1 bis 15,
wobei der Getriebemechanismus (M) aufweist:
einen ersten Planetenradsatz (M1) mit einem ersten Hohlrad (R1); einem ersten Träger (C1), der drehbar ein erstes Planetenrad (P1) trägt, das mit dem ersten Hohlrad (R1) ineinandergreift; und einem ersten Sonnenrad (S1), das mit dem ersten Planetenrad (P1) ineinandergreift; und
einen zweiten Planetenradsatz (M3) mit einem zweiten Hohlrad (R3); einem zweiten Träger (C3), der drehbar ein zweites Planetenrad (P3) trägt, das mit dem zweiten Hohlrad (R3) ineinandergreift und mit dem ersten Hohlrad (R1) verbunden ist; und einem zweiten Sonnenrad (S3), das mit dem zweiten Planetenrad (P3) ineinandergreift und mit dem ersten Sonnenrad (S1) verbunden ist,
wobei das erste Hohlrad (R1) und der zweite Träger (C3) mit der Ausgangswelle (15) verbunden sind, wobei das erste Sonnenrad (S1) und das zweite Sonnenrad (S3) mit der Eingangswelle (14) durch die erste Kupplung (C-1) verbunden sind und durch eine erste Bremse (B-0) am Gehäuse (10) gehalten werden,
wobei das zweite Hohlrad (R3) durch eine zweite Bremse (B-1) am Gehäuse (10) gehalten wird, und
und wobei der erste Träger (C1) durch eine dritte Bremse (B-2) am Gehäuse (10) gehalten wird und mit der Eingangswelle (14) durch die zweite Kupplung (C-2) verbunden ist.

18. Automatisches Fahrzeuggetriebe nach einem der Ansprüche 1 bis 15,
wobei der Getriebemechanismus (M) aufweist: einen Planetenradsatz mit einem Hohlrad (R1); einem Träger (C1), der drehbar ein erstes Planetenrad (P1), das mit dem Hohlrad (R1) ineinandergreift, und ein zweites Planetenrad (P3) trägt, das mit dem ersten Planetenrad (P1) ineinandergreift; einem ersten Sonnenrad (S1), das mit dem ersten Planetenrad (P1) ineinandergreift; und einem zweiten Sonnenrad (S3), das mit dem zweiten Planetenrad (P3) ineinandergreift,
wobei der Träger (C1) mit der Ausgangswelle (15) verbunden ist,
wobei das zweite Sonnenrad (S3) mit der Eingangswelle (14) durch die erste Kupplung (C-1) verbunden ist und durch eine erste Bremse (B-0) am Gehäuse (10) gehalten wird,
wobei das erste Sonnenrad (S1) durch eine zweite Bremse (B-1) am Gehäuse (10) gehalten wird, und
wobei das Hohlrad (R1) durch eine dritte Bremse (B-2) am Gehäuse (10) gehalten wird und mit der Eingangswelle (14) durch die zweite Kupplung (C-2) verbunden ist.

19. Automatisches Fahrzeuggetriebe nach einem der Ansprüche 1 bis 15,
wobei der Getriebemechanismus (M) aufweist: einen Planetenradsatz mit einem Hohlrad (R1); einem Träger (C1), der drehbar ein erstes Planetenrad (P1), das mit dem Hohlrad (R1) ineinandergreift, und ein zweites Planetenrad (P3) trägt, das mit dem ersten Planetenrad (P1) ineinandergreift; einem ersten Sonnenrad (S1) das mit dem ersten Planetenrad (P1) ineinandergreift; und einem zweiten Sonnenrad (S3), das mit dem zweiten Planetenrad (P3) ineinandergreift,
wobei das Hohlrad (R1) mit der Ausgangswelle (15) verbunden ist,
wobei das erste Sonnenrad (S1) mit der Eingangswelle (14) durch die erste Kupplung (C-1) verbunden ist und durch eine erste Bremse (B-0) am Gehäuse (10) gehalten wird,
wobei das zweite Sonnenrad (S3) durch eine zweite Bremse (B-1) am Gehäuse (10) gehalten wird, und
wobei der Träger (C1) durch eine dritte Bremse (B-2) am Gehäuse (10) gehalten wird und mit der Eingangswelle (14) durch die zweite Kupplung (C-2) verbunden ist.

20. Automatisches Fahrzeuggetriebe nach einem der Ansprüche 1 bis 15,
wobei der Getriebemechanismus (M) aufweist:
einen Planetenradsatz mit einem ersten Hohlrad (R1); einem ersten Träger (C1), der drehbar ein erstes Planetenrad (P1) trägt, das mit dem ersten Hohlrad (R1) ineinandergreift; einem ersten Sonnenrad (S1), das mit dem ersten Planetenrad (P1) ineinandergreift; einem zweiten Hohlrad (R3), das mit dem ersten Träger (C1) verbunden ist; einem zweiten Träger (C3), der drehbar ein zweites Planetenrad (P3) trägt, das mit dem zweiten Hohlrad (R3) ineinandergreift und mit dem ersten Hohlrad (R1) verbunden ist; einem zweiten Sonnenrad (S3), das mit dem zweiten Planetenrad (P3) ineinandergreift; und einem dritten Sonnenrad (S2), das mit einem dritten Planetenrad (P2) ineinandergreift, das durch den ersten Träger (C1) getragen wird und relativ zu dem ersten Planetenrad (P1) nicht-drehbar verbunden ist, mit einem kleineren Durchmesser als jenem des ersten Planetenrades (P1),
wobei das erste Hohlrad (R1) und der zweite Träger (C3) mit der Ausgangswelle (15) verbunden sind,
wobei das erste Sonnenrad (S1) mit der Eingangswelle (14) durch die erste Kupplung (C-1) verbunden ist und durch eine erste Bremse (B-0L) am Gehäuse (10) gehalten wird,
wobei das zweite Sonnenrad (S3) durch eine zweite Bremse (B-1) am Gehäuse (10) gehalten wird,
wobei der erste Träger (C1) und das zweite Hohlrad (R3) durch eine dritte Bremse (B-2) am Gehäuse (10) gehalten werden und mit der Eingangswelle (14) durch die zweite Kupplung (C-2) verbunden sind, und
wobei das dritte Sonnenrad (S2) durch eine vierte Bremse (B-0H) am Gehäuse (10) gehalten wird.

## Revendications

1. Transmission automatique de véhicule servant à établir plusieurs rapports de marche avant, comprenant : un carter (10) de transmission; un arbre d'entrée (14); un mécanisme de transmission (M) connecté audit arbre d'entrée (14) et comportant plusieurs éléments de transmission; un arbre de sortie (15) connecté audit mécanisme de transmission (M); un premier et un second embrayage (C-1, C-2) reliant, individuellement et de façon motrice, ledit arbre
d'entrée (24) et deux éléments quelconques de
transmission; et un premier et un second servomécanisme hydraulique (3, 4) servant à appliquer lesdits premier et second embrayages (C-1, C-2) lorsqu'on leur transmet une pression d'huile,
dans laquelle ledit carter (10) de transmission renferme ledit mécanisme de transmission (M), lesdits premier et second embrayages (C-1, C-2) et lesdits premier et second servomécanismes hydrauliques (3, 4), et comporte des parois latérales (10a, 10b) individuellement en ses deux parties d'extrémité axiales,
dans laquelle lesdits premier et second embrayages (C-1, C-2) sont agencés en travers dudit mécanisme de transmission (M) aux deux extrémités axiales dudit mécanisme de transmission (M), et
dans laquelle lesdits premier et second servomécanismes hydrauliques (3, 4) comportent individuellement :
un premier et un second cylindre de type statique (30, 40) formés dans les parois latérales individuelles (10a, 10b) dudit carter (10) de transmission de telle manière qu'ils soient en vis-à-vis;
un premier et un second piston (31, 41) disposés à coulissement dans lesdits premier et second cylindres (30, 40), respectivement, et définissant individuellement, avec lesdits premier et second cylindres (30, 40), des chambres d'huile (3c, 4c) destinées à recevoir la pression d'huile; et
un premier et un second roulement (32, 42) disposés entre lesdits premier et second pistons (31, 41) et lesdits premier et second embrayages (C-1, C-2), respectivement, pour permettre la rotation relative entre lesdits premier et second pistons (31, 41) et lesdits premier et second embrayages (C-1, C-2), respectivement, et pour transmettre les forces de poussée provenant desdits premier et second pistons (31, 41), lorsque ceux-ci reçoivent la pression d'huile, auxdits premier et second embrayages (C-1, C-2), respectivement.

2. Transmission automatique de véhicule selon la revendication 1, comprenant de plus un premier et un second organe de réaction servant à transmettre les forces de poussée respectives provenant desdits premier et second servomécanismes hydrauliques (3, 4), respectivement, audit carter (10) de transmission,
dans laquelle lesdits premier et second organes de réaction transmettent lesdites forces de poussée à des parois opposées dudit carter (10) de transmission qui sont opposées auxdits premier et second servomécanismes hydrauliques (3, 4), respectivement.

3. Transmission automatique de véhicule selon la revendication 2, dans laquelle ledit carter (10) de transmission a une paroi médiane (support central 10d) entre lesdites parois latérales (10a, 10b) servant à soutenir l'arbre de sortie (15),
dans laquelle ladite paroi latérale (10b) associée au second servomécanisme hydraulique (4) et ladite paroi médiane (support central 10d) sont opposées au premier servomécanisme hydraulique (3) et ladite paroi latérale (10a) associée au premier servomécanisme hydraulique (3) et ladite paroi médiane (support central 10d) sont opposées au second servomécanisme hydraulique (4).

4. Transmission automatique de véhicule selon la revendication 2 ou 3, dans laquelle lesdites parois opposées sont lesdites parois latérales (10a, 10b).

5. Transmission automatique de véhicule selon l'une quelconque des revendications 2 à 4, dans laquelle lesdits premier et second organes de réaction transmettent lesdites forces de poussée via des passages communs.

6. Transmission automatique de véhicule selon la revendication 5, dans laquelle ledit passage commun est l'arbre d'entrée (14).

7. Transmission automatique de véhicule selon l'une quelconque des revendications 1 à 6, dans laquelle ledit arbre d'entrée (14) s'étend entre les deux dites parois latérales (10c, 10b) à travers ledit mécanisme de transmission (M),
dans laquelle ledit mécanisme de transmission (M) comporte une première et une deuxième partie formant flasque (56, 66) disposées à proximité desdits premier et second embrayages (C-1, C-2), respectivement, de telle sorte que les forces de poussée provenant desdits premier et second pistons (31, 41) leur sont transmises via lesdits premier et second embrayages (C-1, C-2), respectivement,
dans laquelle lesdites première et deuxième parties formant flasque (56, 66) transmettent les forces de poussée provenant desdits premier et second pistons (31, 41), respectivement, audit arbre d'entrée (14), et
dans laquelle un troisième et un quatrième roulement (59, 69) servant à contenir les mouvements axiaux dudit arbre d'entrée (14), lorsqu'il accompagne les forces de poussée provenant desdits premier et second pistons (31, 41), sont intercalés entre ledit arbre d'entrée (14) et lesdites parois latérales individuelles (10a, 10b).

8. Transmission automatique de véhicule selon la revendication 2, dans laquelle ledit carter (10) de transmission a une paroi médiane (support central 10d) entre lesdites parois latérales (10a, 10b) servant à soutenir l'arbre de sortie (15),
dans laquelle la paroi opposée qui transmet la force de poussée provenant du second servomécanisme hydraulique (4) est ladite paroi latérale (10a) formant ledit premier servomécanisme hydraulique (3), et
dans laquelle la paroi opposée qui transmet la force de poussée provenant du premier servomécanisme hydraulique (3) est ladite paroi médiane (support central 10d).

9. Transmission automatique de véhicule selon l'une quelconque des revendications 2, 3 et 8, dans laquelle lesdits premier et second organes de réaction transmettent lesdites forces de poussée via des passages indépendants les uns des autres.

10. Transmission automatique de véhicule selon la revendication 9 ou 10, dans laquelle l'un desdits premier et second organes de réaction comporte ledit mécanisme de transmission (M) tandis que l'autre comporte ledit arbre d'entrée (14).

11. Transmission automatique de véhicule selon la revendication 9, dans laquelle lesdits premier et second servomécanismes hydrauliques (3, 4) comportent : un premier et un second ressort de rappel (58, 68) servant à appliquer les forces de poussée contre le mouvement desdits premier et second pistons (31, 41), lorsqu'ils accompagnent la transmission de la pression d'huile auxdites chambres d'huile (3c, 4c), auxdits premier et second pistons (31, 41); et un premier et un second organe de poussée (33, 43) situés entre lesdits premier et second roulements (32, 42) et lesdits premier et second embrayages (C-1, C-2), respectivement, et
dans laquelle lesdits premier et second ressorts de rappel (58, 68) prennent appui contre lesdits premier et second organes de poussée (33, 43) et lesdits premier et second organes de réaction, respectivement.

12. Transmission automatique de véhicule selon l'une quelconque des revendications 1 à 6, 8 et 9, dans laquelle ledit arbre d'entrée (14) s'étend entre les deux dites parois latérales (10a, 10b) à travers ledit mécanisme de transmission (M),
dans laquelle ledit mécanisme de transmission (M) comporte une première et une deuxième partie formant flasque (56, 66) disposées à proximité desdits premier et second embrayages (C-1, C-2), respectivement, de telle sorte que les forces de poussée provenant desdits premier et second pistons (31, 41) leur sont transmises via lesdits premier et second embrayages (C-1, C-2), respectivement,
dans laquelle lesdits premier et second embrayages (C-1, C-2) sont actionnés par lesdits premier et second servomécanismes hydrauliques (3, 4), respectivement, pour entraîner ledit arbre d'entrée (14) et n'importe lequel desdits éléments de transmission de façon motrice, et comportent : des moyeux (53, 63) connectés audit arbre d'entrée (14) via lesdites première et deuxième parties formant flasque (56, 66), respectivement; et des cloches (54, 64) connectées chacune à l'un desdits éléments de transmission de façon entraînée et disposées autour des circonférences extérieures desdits moyeux (53, 63) en travers de parties formant disque d'embrayage (50, 60),
dans laquelle la partie formant disque d'embrayage (50, 60) d'au moins l'un desdits premier et second embrayages (C-1, C-2) comporte : plusieurs éléments de friction (52, 62) ayant deux faces, sur lesquelles sont collées des garnitures; et plusieurs disques intermédiaires (51, 61) agencés axialement en alternance avec lesdits éléments de friction (52, 62),
dans laquelle lesdits éléments de friction (52, 62) sont liés, au niveau de leur circonférence extérieure, par des cannelures, à la circonférence intérieure desdites cloches (54, 64),
dans laquelle lesdits disques intermédiaires (51, 61) sont liés, au niveau de leur circonférence intérieure, par des cannelures, à la circonférence extérieure desdits moyeux (53, 63),
dans laquelle au moins l'un desdits premier et second servomécanismes hydrauliques (3, 4) comporte un organe de poussée (33, 43) lié par des cannelures à la circonférence extérieure dudit moyeu (53, 63) entre le premier ou le second roulement (32, 42) dudit servomécanisme hydraulique et l'embrayage correspondant audit servomécanisme hydraulique, et
dans laquelle ledit organe de poussée (33, 43) et lesdites parties formant flasque (56, 66) font face à des éléments de friction (52, 62) qui sont placés individuellement aux deux extrémités extérieures desdits éléments de friction (52, 62).

13. Transmission automatique de véhicule selon l'une quelconque des revendications 1 à 6, 8 et 9, dans laquelle ledit arbre d'entrée (14) s'étend entre les deux dites parois latérales (10a, 10b) à travers ledit mécanisme de transmission (M),
dans laquelle lesdits premier et second embrayages (C-1, C-2) sont actionnés par lesdits premier et second servomécanismes hydrauliques (3, 4) pour entraîner ledit arbre d'entrée (14) et n'importe lequel desdits éléments de transmission de façon motrice, et comportent individuellement : des moyeux (53, 63) connectés audit arbre d'entrée (14); et des cloches (54, 64) connectées à l'un desdits éléments de transmission de façon entraînée et disposées autour des circonférences extérieures desdits moyeux (53, 63) en travers de parties formant disque d'embrayage (50, 60),
dans laquelle l'un desdits premier et second servomécanismes hydrauliques (3) comporte un organe de poussée (33) entre le premier ou le second roulement (32) dudit servomécanisme hydraulique (3) et l'embrayage (C-1) correspondant audit servomécanisme hydraulique (3), et
dans laquelle ledit organe de poussée (33) est connecté de manière relativement non rotative et axialement à coulissement audit moyeu (53) et comporte un rotor (39) ayant dans sa partie circonférentielle plusieurs encoches (39a) s'étendant jusqu'au côté radialement extérieur de ladite cloche (54) et faisant face à un détecteur de rotation (7).

14. Transmission automatique de véhicule selon l'une quelconque des revendications 1 à 5, 8 et 9, dans laquelle lesdits premier et second embrayages (C-1, C-2) sont actionnés par lesdits premier et second servomécanismes hydrauliques (3, 4) pour entraîner ledit arbre d'entrée (14) et n'importe lequel desdits éléments de transmission de façon motrice, et comportent individuellement : des moyeux (53, 63) connectés audit arbre d'entrée (14); et des cloches (54, 64) connectées à l'un desdits éléments de transmission de façon entraînée et disposées autour des circonférences extérieures desdits moyeux en travers de parties formant disque d'embrayage (50, 60), et
dans laquelle lesdits moyeux (53, 63) comportent individuellement des passages traversants d'huile (53a, 63a) servant à permettre la communication entre les circonférences intérieure et extérieure desdits moyeux (53, 63) pour faire passer l'huile de lubrification provenant de leur côté radialement intérieur auxdites parties formant disque d'embrayage (50, 60).

15. Transmission automatique de véhicule selon la revendication 1 ou 2, comprenant de plus : un arbre intermédiaire (22) disposé en parallèle audit arbre de sortie (15) et connecté aux roues de façon motrice; une roue menante intermédiaire (19) connectée d'un seul tenant audit arbre de sortie (15); et une roue menée intermédiaire (23) en prise avec ladite roue menante intermédiaire (19) et connectée d'un seul tenant audit arbre intermédiaire (22),
dans laquelle lesdits premier et second embrayages (C-1, C-2) sont actionnés par lesdits premier et second servomécanismes hydrauliques (3, 4) pour connecter ledit arbre d'entrée (14) et n'importe lequel desdits éléments de friction, respectivement, de façon motrice, et
dans laquelle ladite roue menante intermédiaire (19) est intercalée entre lesdits premier et second embrayages (C-1, C-2).

16. Transmission automatique de véhicule selon l'une quelconque des revendications 1 à 15, dans laquelle ledit mécanisme de transmission (M) comprend :
un premier train d'engrenages planétaire (M1) comportant une première couronne (R1); un premier support (C1) portant, à rotation, un premier pignon (P1) en prise avec ladite première couronne (R1); et une première roue solaire (S1) en prise avec ledit premier pignon (P1); et
un second train d'engrenages planétaire (M2) comportant :
une seconde couronne (R3) connectée audit premier support (C1); un second support (C3) portant, à rotation, un second pignon (P3) en prise avec ladite seconde couronne (R3) et connecté à ladite première couronne (R1); et une seconde roue solaire (S3) en prise avec ledit second pignon (P3),
dans laquelle ladite première couronne (R1) et ledit second support (C3) sont connectés audit arbre de sortie (15),
dans laquelle ladite première roue solaire (S1) est connectée audit arbre d'entrée (14) par ledit premier embrayage (C-1) et retenue sur ledit carter (10) par un premier frein (B-0),
dans laquelle ladite seconde roue solaire (S3) est retenue sur ledit carter (10) par un deuxième frein (B-1), et
dans laquelle ledit premier support (C1) et ladite seconde couronne (R3) sont retenus sur ledit carter (10) par un troisième frein (B-2) et connectés audit arbre d'entrée (14) par ledit second embrayage (C-2).

17. Transmission automatique de véhicule selon l'une quelconque des revendications 1 à 15, dans laquelle ledit mécanisme de transmission (M) comprend :
un premier train d'engrenages planétaire (M1) comportant
une première couronne (R1); un premier support (C1) portant, à rotation, un premier pignon (P1) en prise avec ladite première couronne (R1); et une première roue solaire (S1) en prise avec ledit premier pignon (P1); et
un second train d'engrenages planétaire (M3) comportant : une seconde couronne (R3); un second support (C3) portant, à rotation, un second pignon (P3) en prise avec ladite seconde couronne (R3) et connecté à ladite première couronne (R1); et une seconde roue solaire (S3) en prise avec ledit second pignon (P3) et connectée à ladite première roue solaire (S1),
dans laquelle ladite première couronne (R1) et ledit second support (C3) sont connectés audit arbre de sortie (15),
dans laquelle ladite première roue solaire (S1) et ladite seconde roue solaire (S3) sont connectées audit arbre d'entrée (14) par ledit premier embrayage (C-1) et retenues sur ledit carter (10) par un premier frein (B-0),
dans laquelle ladite seconde couronne (R3) est retenue sur ledit carter (10) par un deuxième frein (B-1), et
dans laquelle ledit premier support (C1) est retenu sur ledit carter (10) par un troisième frein (B-2) et connecté audit arbre d'entrée (14) par ledit second embrayage (C-2).

18. Transmission automatique de véhicule selon l'une quelconque des revendications 1 à 15, dans laquelle ledit mécanisme de transmission (M) comprend un train d'engrenages planétaire comportant : une couronne (R1); un support (C1) portant, à rotation, un premier pignon (P1) en prise avec ladite couronne (R1) et un second pignon (P3) en prise avec ledit premier pignon (P1); une première roue solaire (S1) en prise avec ledit premier pignon (P1); et une seconde roue solaire (S3) en prise avec ledit second pignon (P3),
dans laquelle ledit support (C1) est connecté audit arbre de sortie (15),
dans laquelle ladite seconde roue solaire (S3) est connectée audit arbre d'entrée (14) par ledit premier embrayage (C-1) et retenue sur ledit carter (10) par un premier frein (B-0),
dans laquelle ladite première roue solaire (S1) est retenue sur ledit carter (10) par un deuxième frein (B-1), et
dans laquelle ladite couronne (R1) est retenue sur ledit carter (10) par un troisième frein (B-2) et connectée audit arbre d'entrée (14) par ledit second embrayage (C-2).

19. Transmission automatique de véhicule selon l'une quelconque des revendications 1 à 15, dans laquelle ledit mécanisme de transmission (M) comprend un train d'engrenages planétaire comportant : une couronne (R1); un support (C1) portant, à rotation, un premier pignon (P1) en prise avec ladite couronne (R1) et un second pignon (P3) en prise avec ledit premier pignon (P1); une première roue solaire (S1) en prise avec ledit premier pignon (P1); et une seconde roue solaire (S3) en prise avec ledit second pignon (P3),
dans laquelle ladite couronne (R1) est connectée audit arbre de sortie (15),
dans laquelle ladite première roue solaire (S1) est connectée audit arbre d'entrée (14) par ledit premier embrayage (C-1) et retenue sur ledit carter (10) par un premier frein (B-0),
dans laquelle ladite seconde roue solaire (S3) est retenue sur ledit carter (10) par un deuxième frein (B-1), et
dans laquelle ledit support (C1) est retenu sur ledit carter (10) par un troisième frein (B-2) et connecté audit arbre d'entrée (14) par ledit second embrayage (C-2).

20. Transmission automatique de véhicule selon l'une quelconque des revendications 1 à 15, dans laquelle ledit mécanisme de transmission (M) comprend :
un train d'engrenages planétaire comportant : une première couronne (R1); un premier support (C1) portant, à rotation, un premier pignon (P1) en prise avec ladite première couronne (R1); une première roue solaire (S1) en prise avec ledit premier pignon (P1); une seconde couronne (R3) connectée audit premier support (C1); un second support (C3) portant, à rotation, un second pignon (P3) en prise avec ladite seconde couronne (R3) et connectée à ladite première couronne (R1); une seconde roue solaire (S3) en prise avec ledit second pignon (P3); et une troisième roue solaire (S2) en prise avec un troisième pignon (P2) porté par ledit premier support (C1) et connecté de manière relativement non rotative audit premier pignon (P1) avec un diamètre inférieur à celui dudit premier pignon (P1),
dans laquelle ladite première couronne (R1) et ledit second support (C3) sont connectés audit arbre de sortie (15),
dans laquelle ladite première roue solaire (S1) est connectée audit arbre d'entrée (14) par ledit premier embrayage (C-1) et retenue sur ledit carter (10) par un premier frein (B-0_{L}),
dans laquelle ladite seconde roue solaire (S3) est retenue sur ledit carter (10) par un deuxième frein (B-1),
dans laquelle ledit premier support (C1) et ladite seconde couronne (R3) sont retenus sur ledit carter (10) par un troisième frein (B-2) et connectés audit arbre d'entrée (14) par ledit second embrayage (C-2), et
dans laquelle ladite troisième roue solaire (S2) est retenue sur ledit carter (10) par un quatrième frein (B-0_{H}).
